# EUROPEAN PATENT SPECIFICATION

(11) **EP 2 393 887 B1**
(45) Date of publication and mention of the grant of the patent: **03.09.2014**
(21) Application number: 10703944.8
(22) Date of filing: 04.02.2010
(51) Int. Cl.: C09D 5/16

(54) **COMPOSITION**
ZUSAMMENSETZUNG
COMPOSITION

(30) Priority: 05.02.2009 US 150125 P; 05.02.2009 GB 0901966
(43) Date of publication of application: 14.12.2011
(73) Proprietor: DuPont Nutrition Biosciences ApS, 1001 Copenhagen K. (DK)
(72) Inventor: LAURESEN, Brian Søgaard, DK-8355 Solbjerg (DK); KRISTENSEN, Jakob Broberg, DK-8870 Langå (DK); BESENBACHER, Flemming, DK-8210 Århus V (DK); SUTHERLAND, Duncan, DK-8210 Århus V (DK); SHIPOVSKOV, Stepan, DK-8250 Egå (DK); KRAGH, Karsten Matthias, DK-8260 Viby J (DK)
(74) Representative: Alcock, David
(86) International application number: PCT/GB2010/050177
(87) International publication number: WO 2010/089598

(56) References cited:
- EP-A1- 1 864 777
- WO-A1-2006/013018
- WO-A1-2009/062518
- WO-A2-2004/105485
- WO-A2-2007/100653
- WO-A2-2007/100654
- US-A1- 2003 203 991
- US-A1- 2007 059 273

### SEQUENCE LISTING

<110> DANISCO A/S
<120> Composition
<130> P036124WO
<150> GB 0901966.2
   <151> 2009-02-05
<150> US 61/150125
   <151> 2009-02-05
<160> 1
<170> PatentIn version 3.5
<210> 1
   <211> 275
   <212> PRT
   <213> Bacillus amyloliquefaciens
<400> 1
   Ala Gln Ser Val Pro Tyr Gly Val Ser Gln Ile Lys Ala Pro Ala Leu
   1               5                   10                  15
   His Ser Gln Gly Tyr Thr Gly Ser Asn Val Lys Val Ala Val Ile Asp
               20                  25                  30
   Ser Gly Ile Asp Ser Ser His Pro Asp Leu Lys Val Ala Gly Gly Ala
           35                  40                  45
   Ser Met Val Pro Ser Glu Thr Asn Pro Phe Gln Asp Asn Asn Ser His
       50                  55                  60
   Gly Thr His Val Ala Gly Thr Val Ala Ala Leu Asn Asn Ser Ile Gly
   65                  70                  75                  80
   Val Leu Gly Val Ala Pro Ser Ala Ser Leu Tyr Ala Val Lys Val Leu
                   85                  90                  95
   Gly Ala Asp Gly Ser Gly Gln Tyr Ser Trp Ile Ile Asn Gly Ile Glu
               100                 105                 110
   Trp Ala Ile Ala Asn Asn Met Asp Val Ile Asn Met Ser Leu Gly Gly
           115                 120                 125
   Pro Ser Gly Ser Ala Ala Leu Lys Ala Ala Val Asp Lys Ala Val Ala
       130                 135                 140
   Ser Gly Val Val Val Val Ala Ala Ala Gly Asn Glu Gly Thr Ser Gly
   145                 150                 155                 160
   Ser Ser Ser Thr Val Gly Tyr Pro Gly Lys Tyr Pro Ser Val Ile Ala
                   165                 170                 175
   Val Gly Ala Val Asp Ser Ser Asn Gln Arg Ala Ser Phe Ser Ser Val
               180                 185                 190
   Gly Pro Glu Leu Asp Val Met Ala Pro Gly Val Ser Ile Gln Ser Thr
           195                 200                 205
   Leu Pro Gly Asn Lys Leu Gly Ala Tyr Asn Gly Thr Ser Met Ala Ser
       210                 215                 220
   Pro His Val Ala Gly Ala Ala Ala Leu Ile Leu Ser Lys His Pro Asn
   225                 230                 235                 240
   Trp Thr Asn Thr Gln Val Arg Ser Ser Leu Glu Asn Thr Thr Thr Lys
                   245                 250                 255
   Leu Gly Asp Ser Phe Tyr Tyr Gly Lys Gly Leu Ile Asn Val Gln Ala
               260                 265                 270
   Ala Ala Gln
           275

## Description

### Field of the Invention

This invention relates to an antifouling composition. In particular, this invention relates to a composition comprising a surface coating material and an enzyme cross-linked with a multifunctional agent. The invention also relates to a process for producing the composition and a method for inhibiting the formation of a biofilm using the composition.

### Description of the Prior Art

Biofouling is a problem at any surface that is constantly or intermittent in contact with water. Attachment and growth of living organisms on surfaces causes hygienic and functional problems to many types of equipment and devices ranging from medical implants and electronic circuitry to larger constructions, such as processing equipment, paper mills and ships.

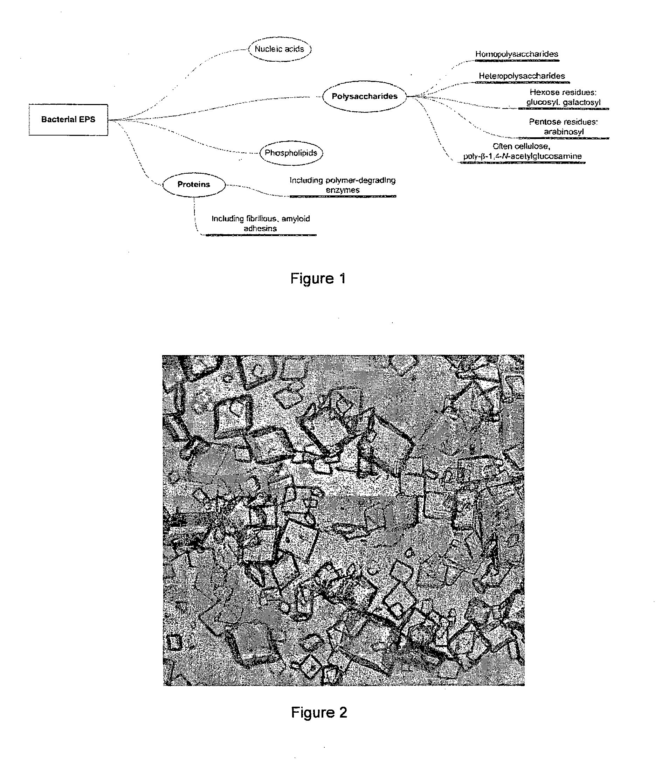

In many cases, biofouling consists of microscopic organic impurities or a visible slimy layer of extracellular polymeric substances (EPS) containing bacteria and other microorganisms. This category of biofouling is called microfouling, or more commonly biofilm, and occurs everywhere in both natural and industrial environments where surfaces are exposed to water. Biofouling in marine environments also includes macroscopic organisms, such as algae and barnacles. This type of biofouling is a particular problem for ships and submerged structures, such as pipelines, cables, fishing nets, the pillars of bridges and oil platforms and other port or hydrotechnical constructions. Fuel consumption of ships may be increased by up to 40% due to biofouling. Fig. 1 is a schematic overview of the structural component chemistry of extracellular polymeric substances (EPS) involved in bacterial biofilms.

In particular, as discussed in US 5071479, the growth of marine organisms on the submerged parts of a ship's hull is a particular problem. Such growth increases the frictional resistance of the hull to passage through water, leading to increased fuel consumption and/or a reduction in the speed of the ship. Marine growths accumulate so rapidly that the remedy of cleaning and repainting as required in dry-dock is generally considered too expensive. An alternative, which has been practiced with increasing efficiency over the years, is to limit the extent of fouling by applying to the hull a top coat paint incorporating antifouling agents. The antifouling agents may be biocides which are freed from the surface of the paint over a period of time at a concentration which is high enough to inhibit fouling by marine organisms at the hull surface

Previously, tributyl tin (TBT) has been a widely used biocide, particularly in marine anti-fouls. However, due to growing concerns about the environmental effects caused by using such organic tin biocides at their commercial levels as an antifoulant active ingredient in coating compositions for aquatic (marine) applications the use has effectively been stopped. It has been shown that, due to the widespread use of tributyltin-type compounds in particular, at concentrations as high as 20 wt.% in paints for ship bottoms, the pollution of surrounding water due to leaching has reached such a level as to cause the degradation of mussel and shell organisms. These effects have been detected along the French-British coastline and a similar effect has been confirmed in U.S. and Far East waters. The International Maritime Organisation (IMO) International Convention on the Control of Harmful Anti-Fouling Systems (AFS Convention) adopted at an IMO diplomatic conference in October 2001 bans application of TBT coatings on ships with effect from 1 January 2003 followed by the elimination of active TBT coatings from ships, which entered into force on 17 September 2008.

Currently, the most widely used antifouling paints are based on copper with booster biocides (Yebra et al, 2004. Progress in Organic Coatings 50:75-104). Booster biocides e.g. copper pyrithione or isothiazolone are however necessary to complement the biocidal action of copper, which is ineffective against some widespread algal species tolerant to copper (e.g. Enteromorpha spp). The booster biocides are equally under suspicion for being harmful to the environment. The safety of booster biocides has been reviewed by several authors (Boxall, 2004. Chemistry Today 22(6):46-8; Karlsson and Eklund, 2004. Marine Pollution Bulletin 2004;49:456-64; Kobayashi and Okamura, 2002. Marine Pollution Bulletin 2002;44:748-51; Konstantinou and Albanis, 2004. Environment Infernational 2004;30:235-48; Ranke and Jastorff, 2002 Fresenius Environmental Bulletin 2002;11(10a):769-72).

There is therefore a desire to provide environmentally friendly antifouling ingredients. It is known from the prior art to use different enzymes in antifouling compositions, such as, e.g. coating compositions. However, maintaining long-term activity in a paint is a significant challenge since most enzymes will inherently diffuse out of the coating relatively fast once it is hydrated. Furthermore, the stability of enzymes in the wet paint is challenged by the solvent in organic solvent based paints. The present invention alleviates these problems since cross-linked enzyme crystals (CLECs) and cross-linked enzyme aggregates (CLEAs) have increased stability as compared to enzymes in solution. Moreover, the CLEC and CLEA particles will be retained in the paint due to their physical size.

In one aspect the present invention provides as claim 1:

In another aspect, the present invention provides as claim 10

In another aspect, the present invention provides as claim 11

Further aspects of the invention are defined in the appended claims.

In the present specification, the term "fouling" refers to the accumulation of unwanted material on a surface. This unwanted material may comprise organisms and/or non-living matter (either organic or inorganic).

In the present specification "foulants" referred to by the terms "anti-foul(s)", "anti-fouling", and "anti-foulants" include organisms and non-living matter which may attach and/or reside and/or grow on the surface which has been treated with the present composition. The organisms include micro-organisms such as bacteria, fungi and protozoa (in particular, bacteria), and organisms such as algae, plants and animals (in particular vertebrates, invertebrates, barnacles, molluscs, bryozoans and polychaetes). The organism may be marine organisms.

In the present specification an "anti-fouling activity" relates to an activity of the cross-linked enzyme crystal or cross-linked enzyme aggregate to prevent or reduce the accumulation of unwanted material on a surface. That is to prevent or reduce the amount of organisms and non-living matter which may attach and/or reside and/or grow on the surface which has been treated with the present composition.

In the art, the term "biofilm" is generally used to describe fouling involving only microorganisms, whereas the term "biofouling" is more general and refers to fouling with both microscopic and macroscopic organisms. The term "biofilm" is also sometimes referred to as microfouling, whereas fouling involving macroscopic organisms is sometimes referred to as macrofouling.

In the present specification "surface coating material" refers to a material, or compound or composition which adheres to a surface to provide a coating on the same. Surface coating materials are well known in the field of paints.

In the present specification, an "the cross-linked enzyme crystal or cross-linked enzyme aggregate is present in an effective amount to reduce or prevent fouling of a surface coated with the composition" may refer to a cross-linked enzyme crystal or cross-linked enzyme aggregate which has anti-fouling activity by itself, or to an cross-linked enzyme crystal or cross-linked enzyme aggregate which acts on a substrate to generate an anti-foulant compound, or to an cross-linked enzyme crystal or cross-linked enzyme aggregate which takes part in a coupled reaction with further enzyme(s) and/or cross-linked enzyme crystal(s) and/or cross-linked enzyme aggregate(s) and/or substrate(s) to generate an anti-foulant compound. The ability of an cross-linked enzyme crystal or cross-linked enzyme aggregate to act as an anti-foulant, or of an enzyme/substrate system to generate an anti-foulant may be determined using an assay selected from those described herein. In the present specification, reducing fouling refers to a reduction in the amount of organisms and non-living matter which may attach and/or reside and/or grow on the surface which has been treated with the present composition compared to an equivalent surface that has not been treated with the composition. This reduction in the amount of organisms and non-living matter on a surface may be by at least 1%, at least 5%, at least 10%, at least 20%, at least 30%, at least 40%, at least 50%, at least 60%, at least 70%, at least 80%, at least 90%, as compared to an equivalent surface that has not been treated. In the present specification, preventing fouling refers to a reduction in the amount of organisms and non-living matter which may attach and/or reside and/or grow on the surface which has been treated with the present composition to a non-detectable amount as compared to an equivalent surface that has not been treated.

In the present specification, the term "cross-linked enzyme crystals" (CLECs) refers to an enzyme that is first crystallised and subsequently cross-linked with a suitable multifunctional cross-linking agent.

In the present specification, the term "cross-linked enzyme aggregates" (CLEAs) refers to an enzyme that is first precipitated from an aqueous solution, providing a physical aggregates of enzyme molecules, and subsequently cross-linked with a suitable multifunctional cross-linking agent. The enzyme may be precipitated using inorganic salts or organic solvents, for example using ammonium sulphate or polyethylene glycol.

### Composition

Preferably the composition comprises a cross-linked enzyme crystal. Preferably the composition comprises a plurality of cross-linked enzyme crystals. Preferably the cross-linked enzyme crystals are the same. In a further aspect, the cross-linked enzyme crystals comprise at least two different types of enzyme crystals each type of enzyme crystal comprising a different enzyme.

Preferably the composition comprises a cross-linked enzyme aggregate. Preferably the composition comprises a plurality of cross-linked enzyme aggregates. Preferably the cross-linked enzyme aggregates are the same. In a further aspect, the cross-linked enzyme aggregates comprise at least two different types of enzyme aggregates each type of enzyme aggregate comprising a different enzyme.

Preferably the composition is an oil-based paint. Preferably the cross-linked enzyme crystal or cross-linked enzyme aggregate is dried before adding to the oil-based paint. Preferably the cross-linked enzyme crystal or the cross-linked enzyme aggregate is freeze dried or spray dried.

### Surface coating material

Any suitable surface coating material may be incorporated in the composition and/or coating of the present invention.

Preferably the surface coating material comprises components selected from polyvinyl chloride resins in a solvent based system, chlorinated rubbers in a solvent based system, acrylic resins and methacrylate resins in solvent based or aqueous systems, vinyl chloride-vinyl acetate copolymer systems as aqueous dispersions or solvent based systems, polyvinyl methyl ether, butadiene copolymers such as butadiene-styrene rubbers, butadiene-acrylonitrile rubbers, and butadiene-styrene-acrylonitrile rubbers, drying oils such as linseed oil, alkyd resins, asphalt, epoxy resins, urethane resins, polyester resins, phenolic resins, natural) rosin, rosin derivatives, disproportionated rosin, partly polymerised rosin, hydrogenated rosin, gum rosin, disproportionated gum rosin, non-aqueous dispersion binder systems, silylated acrylate binder systems, metal acrylate binder systems derivatives and mixtures thereof.

Preferably the surface coating material comprises a binder. Preferably the binder is selected from (natural) rosin, rosin derivatives, disproportionated rosin, partly polymerised rosin, hydrogenated rosin, gum rosin, disproportionated gum rosin, acrylic resins, polyvinyl methyl ether, vinyl acetate-vinychloride-ethylene terpolymers, non-aqueous dispersion binder systems, silylated acrylate binder systems and metal acrylate binder systems. Such binders are of particular interest for anti-fouling compositions used for marine purposes.

### Non-aqueous dispersion binder system

The terms "non-aqueous dispersion resin" and similar expressions are intended to mean a shell-core structure that includes a resin obtained by stably dispersing a high-polarity, high-molecular weight resin particulate component (the "core component") into a non-aqueous liquid medium in a low-polarity solvent using a high-molecular weight component (the "shell component").

The non-aqueous dispersion resin may be prepared by a method wherein a polymerisable ethylenically unsaturated monomer which is soluble in a hydrocarbon solvent and which is polymerisable to form a polymer (the core component) which is insoluble in the hydrocarbon solvent, is subjected to dispersion polymerisation in accordance with a conventional method in the hydrocarbon solvent in the presence of a shell component (the dispersion stabiliser) made of a polymer which dissolves or swells in the solvent.

The non-aqueous dispersion-type resin utilised can be a resin known per se; or it can be produced like the known resins. Such non-aqueous dispersion-type resins and method for their preparation are described in, e.g., US 3,607,821, US 4,147,688, US 4,493,914 and US 4,960,828, Japanese Patent Publication No. 29,551/1973 and Japanese Laid-open Patent Application No. 177,068/1982. Specifically, as the shell component constituting the non-aqueous dispersion-type resin, various high-molecular substances soluble in a low-polarity solvent which are described in, e.g., US 4,960,828 (Japanese Laid-open Patent Application No. 43374/1989), can be used.

From the aspect of antifouling property of the final paint coat, shell components such as an acrylic resin or a vinyl resin may be used.

As the core component, a copolymer of an ethylenically unsaturated monomer having a high polarity is generally applicable.

The non-aqueous dispersion-type resin can be formed by a method known per se. Examples thereof are a method in which the core component and the shell component are previously formed by block co-polymerization or graft co-polymerization, and they are then mixed in a low-polarity solvent and, if required, reacted to form a non-aqueous dispersion (see Japanese Patent Publication No. 29,551/1973), and a method in which a mixture of ethylenically unsaturated monomers at least one of which has a high-polarity group is co-polymerised in a solvent that dissolves the ethylenically unsaturated monomer but does not dissolve a polymer (core component) formed therefrom and in the presence of a dispersion stabiliser that either dissolves or stably disperses in said solvent, and if required, the obtained copolymer is further reacted with said dispersion stabiliser to afford a final non-aqueous dispersion (see U.S. Pat. No. 3,607,821 (Japanese Patent Publication No. 48,566/1982), Japanese Laid-open Patent Application No. 177,068/1982, No. 270,972/2001, No. 40,010/2001 and No. 37,971/2002). In the latter method, the dispersion stabiliser contains in a molecule the component soluble in the low-polarity solvent and the component having affinity for the resin being dispersed, or the dispersion stabiliser of the specific composition that dissolves in the low-polarity solvent is present as the shell component, and the component being dispersed as the core component is formed by copolymerisation of the monomers.

In the non-aqueous dispersion-type resin of the shell-core structure used in this invention, it is important that at least the core component has free acid groups or free acid groups and silyl ester groups that are convertible into the acid group by hydrolysis in sea water. Preferably 5-75% by weight, preferably 5-60% by weight, preferably 7-50% by weight, of the monomers of the core polymer should carry free acid groups. As the free acid groups will have direct influence on the properties of the paint formulation, whereas the silyl ester groups will only have influence after hydrolysis in seawater, it is important that no more than 3% by weight of the monomers of the core component are silyl ester monomers. Typically, no more than 1% by weight of monomers of the core component are silyl ester monomers, and most often no silyl ester groups are present in the core.

Examples of silyl ester monomers are silyl esters of acrylic or methacrylic acid.

If desired, a smaller proportion of the free acid groups or silyl ester groups may also be contained in the shell component. It is, however, believed that less than 3% by weight of the monomers of shell component are free acid groups or silyl ester groups.

The expression "free acid group" is intended to cover the acid group in the acid form. It should be understood that such acid groups temporarily may exist on salt form if a suitable counter ion is present in the composition or in the environment. As an illustrative example, it is envisaged that some free acid groups may be present in the sodium salt form if such groups are exposed to salt water.

Thus, the non-aqueous dispersion-type resin preferably has a resin acid value of 15-400 mg KOH/g, preferably 15 to 300 mg KOH/g, preferably 18 to 300 mg KOH/g. If the total acid value of the non-aqueous dispersion resin is below 15 mg KOH/g, the polishing rate of the paint coat may be too low and the antifouling property will often be unsatisfactory. On the other hand, if the total acid value is above 400 mg KOH/g, the polishing rate may be too high for that reason a problem of water resistance (durability of the paint coat in seawater) becomes a problem. (When the core component and/or the shell component contain the acid precursor group, the resin acid value is one given after the group is converted into the acid group by hydrolysis). The "resin acid value" here referred to is an amount (mg) of KOH consumed to neutralise 1 g of a resin (solids content), expressing a content of an acid group (in case of the acid precursor group, a content of an acid group formed by hydrolysis) of the resin (solids content).

It is advisable that the acid group and/or the acid precursor group is contained in the core component such that the content thereof is, as a resin acid value, at least 80%, preferably at least 90%, more preferably at least 95% of the total resin acid value of the non-aqueous dispersion-type resin.

If the acid value in the core component of the non-aqueous dispersion resin is below 80% of the total acid value of the non-aqueous dispersion-type resin, i.e. the acid value of the shell component is above 20% of the total acid value, potential problems may be as described above with respect to water resistance and durability. Furthermore, if the coating composition comprises free metal ions, a problem with respect to gelation may occur if the acid value of the shell component is above 20% of the total acid value.

This being said, it is normally preferred that the shell component is hydrophobic.

The dry weight ratio of the core component to the shell component in the non-aqueous dispersion-type resin is not especially limited, but is normally in the range of 90/10 to 10/90, preferably 80/20 to 25/75, preferably 60/40 to 25/75.

Furthermore, it is believed that the dry matter of the non-aqueous dispersion resin normally constitutes in the range of 2-30%, preferably 4-25%, preferably 5-25%, preferably 5-20% by wet weight of the coating composition.

As the solvent for dispersing the non-aqueous dispersion resin that will be a binder, various organic solvents that are commonly used for paints can be used without any particular restrictions.

Examples of solvents in which the components of the non-aqueous dispersion resin paint composition are dissolved or dispersed are alcohols such as methanol, ethanol, propanol, isopropanol, butanol, isobutanol and benzyl alcohol; alcohol/water mixtures such as ethanol/water mixtures; aliphatic, cycloaliphatic and aromatic hydrocarbons such as white spirit, cyclohexane, toluene, xylene and naphtha solvent; ketones such as methyl ethyl ketone, acetone, methyl isobutyl ketone, methyl isoamyl ketone, diacetone alcohol and cyclohexanone; ether alcohols such as 2-butoxyethanol, propylene glycol monomethyl ether, ethylene glycol monoethyl ether, ethyl ether and butyl diglycol; esters such as ethyl acetate, propyl acetate, methoxypropyl acetate, n-butyl acetate and 2-ethoxyethyl acetate; chlorinated hydrocarbons such as methylene chloride, tetrachloroethane and trichloroethylene; and mixtures thereof.

Useful solvents are in particular hydrocarbon type solvents and include aliphatic, alicyclic and aromatic solvents. In the present invention, it is preferred to employ an aliphatic hydrocarbon solvent and/or an alicyclic hydrocarbon solvent, or such a solvent in the major amount.

Suitable aliphatic and alicyclic hydrocarbon solvents include, for example, n-hexane, isohexane, n-heptane, n-octane, isooctane, n-decane, n-dodecane, cyclohexane, methylcyclohexane and cycloheptane. Commercial products include, for example, mineral spirit ec, vm&p naphtha and shellzole 72 (manufactured by Shell Chemical Co.); naphtha no. 3, naphtha no. 5, naphtha no. 6 and solvent no. 7 (manufactured by Exxon Chemical Co.); ip solvent 1016, ip solvent 1620 and ip solvent 2835 (manufactured by Idemitsu Petrochemical co., ltd.); and pengazole an-45 and pengazole 3040 (manufactured by Mobile Oil Co.).

Further, the aromatic solvents include, for example, benzene, toluene, xylene and decalin. Commercial products include, for example, Solvesso 100 and Solvesso 150 (manufactured by Exxon Chemical Co.); and Swazole (manufactured by Maruzen Oil Co., Ltd.).

These hydrocarbon type solvents may be used alone or in combination as a mixture of two or more of them.

### Silylated acrylate binder system

In a further aspect, the co-polymer to be used in the coating composition comprises at least one side chain bearing at least one terminal group of the general formula I: 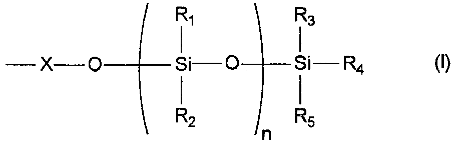 wherein n is an integer of 1 or more.
When n is an integer of 1, 2, 3, 4 or more, it is in these cases preferred that n is up to about 5,000, preferably n is an integer from 1-50, preferably n is an integer from2-15.
X is selected from:

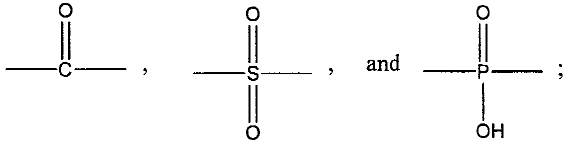

R₁-R₅ are each groups independently selected from the group consisting of C₁₋₂₀-alkyl, C₁₋₂₀-alkoxy, phenyl, optionally substituted phenyl, phenoxy and optionally substituted phenoxy. With respect to the above formula I it is generally preferred that each of the alkyl and alkoxy groups has up to about 5 carbon atoms (C₁₋₅₋alkyl). Illustrative examples of substituents for the substituted phenyl and phenoxy groups include halogen, C₁₋₅alkyl , C₁₋₅-alkoxy or C₁₋₁₀alkylcarbonyl. As indicated above, R₁-R₅ may be the same or different groups.

Monomers comprising the terminal groups of the general formula I above may be synthesised as described in EP 0 297 505 B1, i.e. the monomers may, for example, be synthesised by condensation, such as e.g. dehydrocondensation of e.g. acrylic acid, methacrylic acid or a maleic acid monoester with an organosilyl compound having R₃-R₅ in its molecule, such as an organosiloxane having a di-substituted monohydroxysilane group at one terminal, a tri-substituted monohydroxysilane, an organosiloxane having a hydroxymethyl group or a halogen methyl group, such as a chloro methyl group, at one terminal, or a tri-substituted silane.

Such monomers may be co-polymerised (in order to obtain the co-polymer to be used in the coating composition according to the invention) with a vinyl polymerisable monomer A. Examples of suitable vinyl polymerisable monomers include methacrylate esters such as methyl methacrylate, ethyl methacrylate, butyl methacrylate, 2-ethylhexyl methacrylate, 2-hydroxyethyl methacrylate and methoxy ethyl methacrylate; acrylate esters such as ethyl acrylate, butyl acrylate, 2 ethylhexyl acrylate and 2-hydroxyethyl acrylate; maleic acid esters such as dimethyl maleate and diethyl maleate; fumaric acid esters such as dimethyl fumarate and diethyl fumarate; styrene, vinyltoluene, α-methylstyrene, vinyl chloride, vinyl acetate, butadiene, acrylamide, acrylonitrile, methacrylic acid, acrylic acid, isobornyl methacrylate and maleic acid.

These vinyl polymerisable monomers (A) act as modifying components that impart desirable properties to resulting co-polymer. These polymers are also useful for the purpose of obtaining polymers that have higher molecular weights than the homopolymers made up of monomers comprising the terminal group of the general formula II and III (below). The amount of vinyl polymerisable monomers is not more than 95% by weight of the total weight of the resulting co-polymer, preferably not more than 90% by weight. Accordingly, the amount of monomers comprising the terminal groups of the general formula I above is at least 5% by weight, in particular at least 10% by weight.

The co-polymers comprising at least one side chain bearing at least one terminal group of the general formula I (shown above) may be formed by polymerising at least one monomer comprising a terminal group of the general formula I with one or more of the vinyl polymerisable monomers (A) above in the presence of a suitable (vinyl) polymerisation initiator in accordance with routine procedures. Methods of polymerisation include solution polymerisation, bulk polymerisation, emulsion polymerisation, suspension polymerisation, anionic polymerisation and co-ordination polymerisation. Examples of suitable vinyl polymerisation initiators are azo compounds such as azobisisobutyronitrile and triphenylmethylazobenzene, and peroxides such as benzoyl peroxide and di-*tert*-butyl peroxide.

The co-polymers to be prepared by the methods described above preferably have weight average molecular weights in the range of 1,000-1,500,000, such as in the range of 5,000-1,500,000, e.g. in the range of 5,000-1,000,000, in the range of 5,000-500,000, in the range of 5,000-250,000, or in the range of 5,000-100,000. If the molecular weight of the co-polymer is too low, it is difficult to form a rigid, uniform and durable film. If, on the other hand, the molecular weight of the co-polymer is too high, it makes the varnish highly viscous. Such a high viscosity varnish should be thinned with a solvent for formulation of a coating composition. Therefore, the resin solids content of the coating composition is reduced and only a thin dry film can be formed by a single application. This is inconvenient in that several applications of the coating composition are necessary to attain proper dry film thickness.

Although a number of different methods for determining the weight average molecular weight of the polymer in question will be known to the person skilled in the art, it is preferred that the weight average molecular weight is determined in accordance with the GPC-method described at page 34 in WO 97/44401.

In another aspect, the co-polymer to be used in the coating composition comprises at least one side chain bearing at least one terminal group of the general formula II: 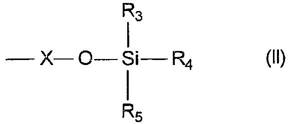 wherein X, R₃, R₄ and R₅ are as defined for general formula I.

Examples of monomers having a terminal group of the general formula II (shown above) are acid functional vinyl polymerisable monomers, such as monomers derived from acrylic acid, methacrylic acid, maleic acid (preferably in the form of a monoalkyl ester with 1-6 carbon atoms) or fumaric acid (preferably in the form of a monalkyl ester with 1-6 carbon atoms).

With respect to the triorganosilyl group, i.e. the -Si(R₃)(R₄)(R₅) group, shown in the above formulae I or II, R₃, R₄ and R₅ may be the same or different, such as C₁₋₂₀-alkyl (e.g. methyl, ethyl, propyl, butyl, cycloalkyl such as cyclohexyl and substituted cyclohexyl); aryl (e.g., phenyl and naphthyl) or substituted aryl (e.g., substituted phenyl and substituted naphthyl). Examples of substituents for aryl halogen, C₁₋₁₈-alkyl , C₁₋₁₀-acyl, sulphonyl , nitro, or amino.

Thus, specific examples of a suitable triorganosilyl group (i.e. the -Si(R₃)(R₄)(R₅) group) shown in the general formula I or II include trimethylsilyl, triethylsilyl, tri-n-propylsilyl, tri-n-butylsilyl, tri-*iso*-propylsilyl, tri-n-pentylsilyl, tri-n-hexylsilyl, tri-n-octylsilyl, tri-n-dodecylsilyl, triphenylsilyl, tri-p-methylphenylsilyl, tribenzylsilyl, tri-2-methylisopropylsilyl, tri-*tert-*butylsilyl, ethyldimethylsilyl, n-butyldimethylsilyl, di-*iso*-propyl-n-butylsilyl, n-octyl-di-n-butylsilyl, di-*iso*-propryloctadecylsilyl, dicyclohexylphenylsilyl, *tert*-butyldiphenylsilyl, dodecyldiphenylsilyl and diphenylmethylsilyl.

Specific examples of suitable methacrylic acid-derived monomers bearing at least one terminal group of the general formula I or II include trimethylsilyl (meth)acrylate, triethyl-silyl(meth)acrylate, tri-n-propylsilyl(meth)acrylate, triisopropylsilyl (meth)acrylate, tri-n-butylsilyl (meth)acrylate, triisobutylsilyl (meth)acrylate, tri-tert-butylsilyl(meth)acrylate, tri-n-amylsilyl (meth)acrylate, tri-n-hexylsilyl (meth)acrylate, tri-n-octylsilyl (meth)acrylate, tri-n-dodecylsilyl (meth)acrylate, triphenylsilyl (meth)acrylate, tri-p-methylphenylsilyl (meth)acrylate, tribenzylsilyl (meth)acrylate, ethyldimethylsilyl (meth)acrylate, n-butyldimethylsilyl (meth)acrylate, diisopropyl-n-butylsilyl (meth)acrylate, n-octyldi-n-butylsilyl, (meth)acrylate, diisopropylstearylsilyl (meth)acrylate, dicyclohexylphenylsilyl (meth)acrylate, t-butyldiphenylsilyl (meth)acrylate, and lauryldiphenylsilyl (meth)acrylate.

Specific examples of suitable maleic acid-derived and fumaric acid-derived monomers bearing at least one terminal group of the general formula I or II include triisopropylsilyl methyl maleate, triisopropylsilyl amyl maleate, tri-n-butylsilyl n-butyl maleate, *tert-*butyldiphenylsilyl methyl maleate, t-butyldiphenylsilyl n-butyl maleate, triisopropylsilyl methyl fumarate, triisopropylsilyl amyl fumarate, tri-n-butylsilyl n-butyl fumarate, *tert-*butyldiphenylsilyl methyl fumarate, and *tert*-butyldiphenylsilyl n-butyl fumarate.

In another aspect, the co-polymer to be used in the coating composition comprises monomer units with a terminal group of the general formula II (as discussed above) in combination with a second monomer B of the general formula III:

Y-(CH(R_{A})-CH(R_{B})-O)ₚ-Z (III)

wherein Z is a C₁₋₂₀-alkyl group or an aryl group; Y is an acryloyloxy group, a methacryl-oyloxy group, a maleinoyloxy group or a fumaroyloxy group; R_{A} and R_{B} are independently selected from the group consisting of hydrogen, C₁₋₂₀-alkyl and aryl; and p is an integer of 1 to 25.

If p> 2, R_{A} and R_{B} are preferably hydrogen or CH₃, i.e. if p>2 the monomer B is preferably derived from a polyethylene glycol or a polypropylene glycol.

If p=1 it is contemplated that monomers, wherein R_{A} and R_{B} are larger groups, such as C₁₋₂₀-alkyl or aryl.

As shown in formula III, monomer B has in its molecule an acryloyloxy group, a methacryloyloxy group, a maleinoyloxy group (preferably in the form of a mono-C₁₋₆-alkyl ester), or a fumaroyloxy group (preferably in the form of a mono-C₁₋₆-alkyl ester) as an unsaturated group (Y) and also alkoxy- or aryloxypolyethylene glycol.ln the alkoxy- or aryloxypolyethylene glycol group, the degree of polymerisation (p) of the polyethylene glycol is from 1 to 25.

Examples of the alkyl or aryl group (Z) include C₁₋₁₂-alkyl (e.g., methyl, ethyl, propyl, butyl, cycloalkyl such as cyclohexyl and substituted cyclohexyl); and aryl (e.g., phenyl and naphthyl) and substituted aryl (e.g., substituted phenyl and substituted naphthyl). Examples of substituents for aryl include halogen, C₁₋₁₈-alkyl group , C₁₋₁₀-alkylcarbonyl, nitro, or amino.

Specific examples of monomer B which has a (meth)acryloyloxy group in a molecule include methoxyethyl (meth)acrylate, ethoxyethyl (meth)acrylate, propoxyethyl (meth)-acrylate, butoxyethyl (meth)acrylate, hexoxyethyl (meth)acrylate, methoxydiethylene glycol (meth)acrylate, methoxytriethylene glycol (meth)acrylate, ethoxydiethylene glycol (meth)acrylate, and ethoxytriethylene glycol (meth)acrylate.

Specific examples of monomer B which has a maleinoyloxy or fumaroyloxy group in a molecule include methoxyethyl n-butyl maleate, ethoxydiethylene glycol methyl maleate, ethoxytriethylene glycol methyl maleate, propoxydiethylene glycol methyl maleate, butoxyethyl methyl maleate, hexoxyethyl methyl maleate, methoxyethyl n-butyl fumarate, ethoxydiethylene glycol methyl fumarate, ethoxytriethylene glycol methyl fumarate, propoxydiethylene glycol methyl fumarate, butoxyethyl methyl fumarate, and hexoxyethyl methyl fumarate.

As will be understood by the person skilled in the art, other vinyl monomers may be incorporated in the resulting co-polymer comprising either monomer units having a terminal group of the general formula II (shown above) or in the resulting co-polymer comprising monomer units having a terminal group of the general formula II (shown above) in combination with the second monomer B of the formula III (shown above).

With respect to other monomers co-polymerisable with the above-mentioned monomers, use may be made of various vinyl monomers such as the vinyl polymerisable monomers (A) discussed above.

In the monomer mixture, the proportions of monomer having a terminal group of the general formula II, monomer B and other monomer(s) co-polymerisable therewith (e.g. monomer A) may be suitably determined depending on the use of the coating composition. In general, however, it is preferred that the proportion of the monomer having a terminal group of the general formula II is from 1-95% by weight, that of monomer B is from 1-95% by weight, and that of other monomer(s) co-polymerisable therewith is from 0-95% by weight on the basis of the total weight of the monomers.

Thus, co-polymers comprising a combination of monomer units bearing a terminal group of the general formula II and monomer units B (and optionally monomer A) can be obtained by polymerising such monomer mixtures in the presence of a vinyl polymerisation initiator by any of various methods such as solution polymerisation, bulk polymerisation, emulsion polymerisation, and suspension polymerisation in an ordinary way, which will be known to the person skilled in polymer chemistry. It is preferred, however, to employ the solution polymerisation method or the bulk polymerisation method.

Examples of the vinyl polymerisation initiators include azo compounds such as azobis-isobutyronitrile and triphenylmethylazobenzene; and peroxides such as benzoyl peroxide, di-*tert*-butyl peroxide, *tert*-butyl peroxybenzoate, and *tert*-butyl peroxyisopropyl-carbonate.

The molecular weight of the resulting co-polymer thus obtained is desirably in the range of 1,000-150,000, preferably in the range of 3,000-100,000, preferably in the range of 5,000-100,000 in terms of weight-average molecular weight. Too low molecular weights result in difficulties in forming normal coating film, while too high molecular weights result in disadvantages that a single coating operation only gives thin coating film and, hence, coating operations should be conducted in a larger number. It is preferred to regulate the solid content of the polymer solution to a value in the range of 5-90% by weight, desirably from 15-85% by weight.

In a further aspect, the co-polymer to be used in the coating composition comprises monomer units with a terminal group of the general formula II (as discussed above) in combination with a second monomer C of the general formula IV: 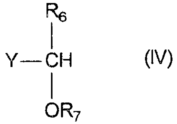 wherein Y is an acryloyloxy group, a methacryloyloxy group, a maleinoyloxy group or a fumaroyloxy group, and both of R₆ and R₇ are C₁₋₁₂-alkyl.

As shown in formula IV, monomer C has in its molecule an acryloyloxy group, a methacryloyloxy group, a maleinoyloxy group (preferably in the form of a mono-C₁₋₆-alkyl ester), or a fumaroyloxy group (preferably in the form of a mono-C₁₋₆-alkyl ester) as an unsaturated group (Y) and also a hemi-acetal group.

In the hemi-acetal group, examples of R₆ include C₁₋₁₂-alkyl, preferably C₁₋₄-alkyl (e.g., methyl, ethyl, n-propyl, n-butyl, isopropyl, isobutyl, and *tert*-butyl); and examples of R₇ include C₁₋₁₂-alkyl, preferably C₁₋₈-alkyl (e.g., methyl, ethyl, n-propyl, isopropyl, n-butyl, isobutyl, and *tert*-butyl), and a substituted or unsubstituted C₅₋₈-cycloalkyl (e.g., cyclohexyl).

Monomer C can be prepared by an ordinary addition reaction of a carboxy group-containing vinyl monomer selected from acrylic acid, methacrylic acid, maleic acid (or monoester thereof), and fumaric acid (or monoester thereof), with an alkyl vinyl ether (e.g., ethyl vinyl ether, propyl vinyl ether, butyl vinyl ether, hexyl vinyl ether, and 2-ethylhexyl vinyl ether), or a cycloalkyl vinyl ether (e.g., cyclohexyl vinyl ether).

As will be understood by the person skilled in the art, other vinyl monomers may be incorporated in the resulting co-polymer comprising monomer units having a terminal group of the general formula II (shown above) in combination with the second monomer C of the formula IV (shown above).

With respect to other monomers co-polymerisable with the above-mentioned monomers, use may be made of various vinyl monomers such as the vinyl polymerisable monomers (A) discussed above.

In the monomer mixture, the proportions of monomer having a terminal group of the general formula II, monomer C and other monomer(s) co-polymerisable therewith (e.g. monomer A) may be suitably determined depending on the use of the coating composition. In general, however, it is preferred that the proportion of the monomer having a terminal group of the general formula II is from 1-95% by weight (preferably from 1-80% by weight), that of monomer C is from 1-95% by weight (preferably from 1-80% by weight), and that of other monomer(s) co-polymerisable therewith is up to 98% by weight on the basis of the total weight of the monomers.

Thus, co-polymers comprising a combination of monomer units bearing a terminal group of the general formula II and monomer units C (and optionally monomer A) can be obtained by polymerising such monomer mixtures in the presence of a vinyl polymerisation initiator by any of various methods such as solution polymerisation, bulk polymerisation, emulsion polymerisation, and suspension polymerisation in an ordinary way, which will be known to the person skilled in polymer chemistry. It is preferred, however, to employ the solution polymerisation method or the bulk polymerisation method.

Examples of the vinyl polymerisation initiators include azo compounds such as azobisisobutyronitrile and triphenylmethylazobenzene; and peroxides such as benzoyl peroxide, di-*tert*-butyl peroxide, *tert*-butyl peroxybenzoate, and *tert*-butyl peroxyisopropyl-carbonate.

The molecular weight of the resulting co-polymer thus obtained is desirably in the range of 1,000-150,000, preferably in the range of 3,000-100,000, preferably in the range of 5,000-100,000 in terms of weight-average molecular weight. Too low molecular weights result in difficulties in forming normal coating film, while too high molecular weights result in disadvantages that a single coating operation only gives thin coating film and, hence, coating operations should be conducted in a larger number.

Although it is preferred that the chemistry of the binder co-polymer is as described above, it is contemplated that also other silyl-containing co-polymers having a slight different structure may be useful for the purposes described herein. Thus, an example of a binder co-polymer having a slight different structure compared to the chemistry disclosed above is a binder co-polymer comprising at least one side chain bearing at least one terminal group of formula V: 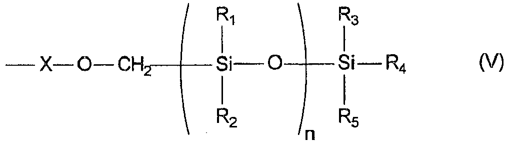 wherein X, n, R₁, R₂, R₃, R₄ and R₅ are as defined above in connection with general formula I.

### Metal acrylate binder system

In another aspect, the co-polymer to be used in the coating composition according to the invention comprises at least one side chain bearing at least one terminal group of the general formula VI

-X-O-M-(L)ₙ (VI)

wherein X is selected from: 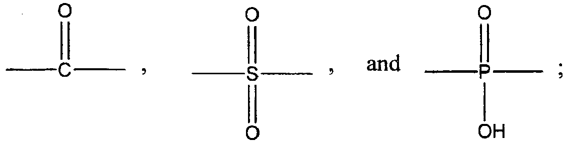 Wherein n is as defined above with regard to general formula I.

M is a metal. Metal (M) is any metal having a valency of 2 or more may be used. Specific examples of suitable metals may be selected from Ca, Mg, Zn, Cu, Ba, Te, Pb, Fe, Co, Ni, Bi, Si, Ti, Mn, Al and Sn. Preferred examples are Co, Ni, Cu, Zn, Mn, and Te, in particular Cu and Zn. When synthesising the metal-containing co-polymer, the metal may be employed in the form of its oxide, hydroxide or chloride. It is contemplated, however, that the metal may also be employed in the form of other halogenides (such as its fluoride, iodide or bromide salt) or in the form of its sulfide or carbonate.

L is a ligand.

Examples of monomers having a terminal group of the general formulae I or II (shown above) are acid-functional vinyl polymerisable monomers, such as methacrylic acid, acrylic acid, p-styrene sulfonic acid, 2-methyl-2-acrylamide propane sulfonic acid, methacryl acid phosphoxy propyl, methacryl 3-chloro-2-acid phosphoxy propyl, methacryl acid phosphoxy ethyl, itaconic acid, maleic acid, maleic anhydride, monoalkyl itaconate (e.g. methyl, ethyl, butyl, 2-ethyl hexyl), monalkyl maleate (e.g. methyl, ethyl, butyl, 2-ethyl hexyl; half-ester of acid anhydride with hydroxyl containing polymerisable unsaturated monomer (e.g. half-ester of succinic anhydride, maleic anhydride or phthalic anhydride with 2-hydroxy ethyl methacrylate.

As will be understood by the person skilled in the art, and as discussed in detail below, the above-mentioned monomers may be co-polymerised (in order to obtain the co-polymer to be used in the coating composition according to the invention) with one or more vinyl polymerisable monomers. Examples of such vinyl polymerisable monomers are methyl acrylate, methyl methacrylate, ethyl acrylate, ethyl methacrylate, propyl acrylate, propyl methacrylate, butyl acrylate, butyl methacrylate, octyl acrylate, octyl methacrylate, 2-ethyl hexyl acrylate, 2-ethyl hexyl methacrylate, methoxy ethyl methacrylate, styrene, vinyl toluene, vinyl pyridine, vinyl pyrolidone, vinyl acetate, acrylonitrile, methacrylonitrile, dimethyl itaconate, dibutyl itaconate, di-2-ethyl hexyl itaconate, dimethyl maleate, di (2-ethyl hexyl) maleate, ethylene, propylene and vinyl chloride.

With respect to the ligand (L), each individual ligand is preferably selected from the group consisting of 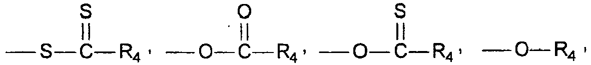 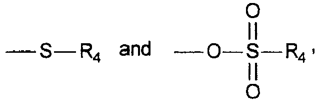 wherein R₄ is a monovalent organic residue.

Preferably, R₄ is selected from the group consisting of 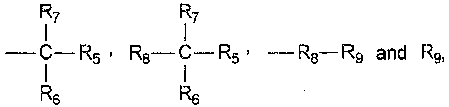 wherein R₅ is hydrogen or a hydrocarbon group having from 1 to 20 carbon atoms; R₆ and R₇ each independently represents a hydrocarbon group having from 1 to 12 carbon atoms;

R₈ is a hydrocarbon group having from 1 to 4 carbon atoms; and R₉ is cyclic hydrocarbon group having from 5 to 20 carbon atoms, such as abietic acid, pallustric acid, neoabietic acid, levopimaric acid, dehydroabietic acid, pimaric acid, isopimaric acid, sandaracopimaric acid and Δ8,9-isopimaric acid.

Examples of compounds which may be used as ligands (L) are:
(1) Compounds comprising the group 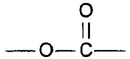 e.g. aliphatic acids, such as levulinic acid; alicyclic acids, such as naphthenic acid, chaulmoogric acid, hydnocarpusic acid, neo abietic acid, levo pimaric acid, palustric acid, 2-methyl-bicyclo-2,2,1-heptane-2-carboxylic acid; aromatic carboxylic acids such as salicylic acid, cresotic acid, α-naphthoic acid, β-naphthoic acid, p-oxy benzoic acid; halogen containing aliphatic acids, such as monochloro acetic acid, monofluoro acetic acid; halogen containing aromatic acids, such as 2,4,5-trichloro phenoxy acetic acid, 2,4-dichloro phenoxy acetic acid, 3,5-dichloro benzoic acid; nitrogen-containing organic acids, such as quinoline carboxylic acid, nitro benzoic acid, dinitro benzoic acid, nitronaphthalene carboxylic acid; lactone carboxylic acids, such as pulvinic acid, vulpinic acid; uracil derivatives, such as uracil-4-carboxylic acid, 5-fluoro uracil-4-carboxylic acid, uracil-5-carboxylic acid; penicillin-derived carboxylic acids, such as penicillin V, ampicillin, penicillin BT, penicillanic acid, penicillin G, penicillin O; Rifamycin B, Lucensomycin, Salcomycin, chloroamphenicol, variotin, Trypacidine; and various synthetic fatty acids.
(2) Compounds comprising the group 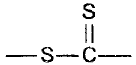 e.g. dimethyl dithiocarbamate and other dithiocarbamates.
(3) Compounds comprising the group 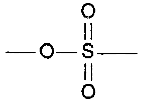 e.g. sulphur containing aromatic compounds, such as 1-naphthol-4-sulphonic acid, p-phenyl benzene sulphonic acid, β-naphthalene sulphonic acid and quinoline sulphonic acid.
(4) Compounds comprising the group
   such as compounds comprising the following groups

   -S-
(5) Compounds comprising the group 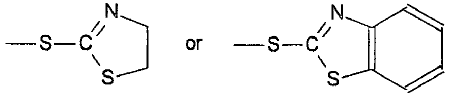 such as various thiocarboxylic compounds. 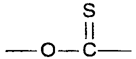
(6) Compounds comprising the group -O- or -OH
   e.g. phenol, cresol, xylenol, thymol, carvacol, eugenol, isoeugenol, phenyl phenol, benzyl phenol, guajacol, butyl stilbene, (di) nitro phenol, nitro cresol, methyl salicylate, benzyl salicylate, mono-, di-, tri-, tetra- and penta-chlorophenol, chlorocresol, chloroxylenol, chlorothymol, p-chloro-o-cyclo-hexyl phenol, p-chloro-o-cyclopentyl phenol, p-chloro-o-n-hexyl phenol, p-chloro-o-benzyl phenol, p-chloro-o-benzyl-m-cresol and other phenols; β-naphthol, 8-hydroxy quinoline.

Although not generally preferred, it is also possible that one or more or all of the ligands (L) are -OH groups.

The co-polymer to be used in the coating composition according to the invention may be prepared as described in e.g. EP 0 471 204 B1, EP 0 342 276 B1 or EP 0 204 456 B1, i.e. by one of the following methods:
A method wherein a polymerisable unsaturated monomer having the desired organic acid metal ester bond at an end portion is first prepared and co-polymerised with other polymerisable unsaturated monomer(s);

A method wherein a co-polymer obtained by the co-polymerisation of a polymerisable unsaturated organic acid monomer with other polymerisable unsaturated monomer(s) is reacted with a monovalent organic acid and a metal oxide, chloride or hydroxide or is subjected to an ester exchange reaction with a monovalent carboxylic acid metal ester. More specifically, the co-polymer may be prepared by either one of the following methods.
(1) A mixture of
   (a) a metal oxide, hydroxide, sulfide or chloride,
   (b) a monovalent organic acid or its alkali metal salt, and
   (c) a polymerisable unsaturated organic acid or its alkali metal salt, is heated under stirring at a temperature lower than the decomposition temperature of the desired metal ester product, and the by-produced substances as alkali metal chloride, water, monovalent organic acid metal ester; bifunctional polymerizable unsaturated organic acid metal salt are removed to obtain a purified metal ester between the polymerisable unsaturated organic acid and the monovalent organic acid.

   In the above-mentioned reaction, it is not always necessary to use stoichiometric amounts of (a), (b) and (c) and one may use, in terms of equivalent ratio, (a):(b):(c)=1:0.8-3:0.8-2 to obtain the desired product.
   The thus obtained metal ester between the polymerisable unsaturated organic acid and the monovalent organic acid or the mixture of said metal ester and the monovalent organic metal ester is then subjected to a homo-polymerisation or a co-polymerisation with other co-polymerisable monomer(s) to give the desired co-polymer having at least one side chain bearing at least terminal group as shown in formulae I or II above.
(2) Alternatively, a mixture of
   (d) a co-polymer having at a side chain an organic acid or its alkali metal salt,
   (e) a metal oxide, hydroxide, sulfide or chloride, and
   (f) a monovalent organic acid, is heated under stirring at a temperature lower than the decomposition temperature of the desired metal ester-containing co-polymer, and the by-produced substances are removed, if desired, to obtain a co-polymer having at least one side chain bearing at least one terminal group as shown in formulae I or II above.

   With respect to the ratios of the materials used in this reaction, it is preferred to use, in terms of equivalent ratio, (d):(e):(f)=1:0.8-1.5:0.8-2 and more preferably 1:1.0-1.2:1.0-1.5.
   When a low boiling monovalent organic acid is selected and the reaction is accompanied by a dehydration, there is a fear that the monovalent organic acid is distilled off together with water and that a metal bond is formed between the polymer-chains, thereby causing an increase in viscosity and gelation of the product. Therefore, in this particular case, it is therefore preferred to use a higher amount of (f) than indicated above.
(3) Alternatively, the desired product may be prepared by reacting a co-polymer having at a side chain an organic acid (g) with a monovalent organic acid metal ester (h) at a temperature of not higher than the decomposition temperature of the desired product, thereby effecting an ester exchange reaction between the materials used.

In this reaction, when the selected monovalent organic acid has a low boiling point (as, for example, acetic acid), there is a fear that a metal ester bonding is formed between the polymer-chains and, therefore, the reaction should be carefully controlled and proceeded with. Usually, the material (h) is used in an amount of from 0.3 to 3 equivalents, more preferably of from 0.4 to 2.5 equivalents, per equivalent of (g).

Examples of polymerisable unsaturated organic acids (c) to be used include methacrylic acid, acrylic acid, p-styrene sulfonic acid, 2-methyl-2-acrylamide propane sulfonic acid, methacryl acid phosphoxy propyl, methacryl 3-chloro-2-acid phosphoxy propyl, methacryl acid phosphoxy ethyl, itaconic acid, maleic acid, maleic anhydride, monoalkyl itaconate (e.g. methyl, ethyl, butyl, 2-ethyl hexyl), monalkyl maleate (e.g. methyl, ethyl, butyl, 2-ethyl hexyl; half-ester of acid anhydride with hydroxyl containing polymerisable unsaturated monomer (e.g. half-ester of succinic anhydride, maleic anhydride or phthalic anhydride with 2-hydroxy ethyl (meth) acrylate.

With respect to the monovalent organic acid (b), any aliphatic, aromatic, alicyclic or heterocyclic organic acids may be used. Typical examples of such acids are: acetic acid, propionic acid, levulinic acid benzoic acid, salicylic acid, lactic acid, 3,5-dichlorobenzoic acid, lauric acid, stearic acid, nitrobenzoic acid, linolenic acid, ricinoleic acid, 12-hydroxy stearic acid, fluoroacetic acid, pulvinic acid, abietic acid, mercaptobenzothiazole, o-cresotic acid, naphthol-1-carboxylic acid, p-phenyl benzene sulfonic acid, p-oxybenzoic acid, chloroacetic acid, dichloroacetic acid, naphthenic acid, b-naphthalene sulphonic acid, naphthol-1-sulfonic acid, 5-chloro-α,α-bis (3,5-dichloro-2-hydroxyphenyl) toluene sulphonic acid, p-phenyl benzoic acid, p-toluene sulphonic acid, p-benzene chlorosulphonic acid, dimethyl dithio carbamic acid, diethyl dithio carbamic acid, dibutyl dithiocarbamic acid, lithocholic acid, phenoxy acetic acid, 2,4-dichlorophenoxy acetic acid, pivalic acid, valeric acid and various synthetic fatty acids.

With respect to the above-mentioned other polymerisable unsaturated monomers, any customarily used ethylenically unsatured monomer may be used. Examples of such monomers are methyl acrylate, methyl methacrylate, ethyl acrylate, ethyl methacrylate, propyl acrylate, propyl methacrylate, butyl acrylate, butyl methacrylate, octyl acrylate, octyl methacrylate, 2-ethyl hexyl acrylate, 2-ethyl hexyl methacrylate, methoxy ethyl methacrylate, styrene, vinyl toluene, vinyl pyridine, vinyl pyrolidone, vinyl acetate, acrylonitrile, methacrylo nitrile, dimethyl itaconate, dibutyl itaconate, di-2-ethyl hexyl itaconate, dimethyl maleate, di (2-ethyl hexyl) maleate, ethylene, propylene and vinyl chloride. One particular type of co-monomers is acrylic or methacrylic esters wherein the alcohol residue includes a bulky hydrocarbon radical or a soft segment, for example a branched alkyl ester having 4 or more carbon atoms or a cycloalkyl ester having 6 or more atoms, a polyalkylene glycol monoacrylate or monomethacrylate optionally having a terminal alkyl ether group or an adduct of 2-hydroxyethyl acrylate or methacrylate with caprolactone, e.g. as described in EP 0 779 304 A1"

If desired, hydroxy-containing monomers, such as 2-hydroxy ethyl acrylate, 2-hydroxy ethyl methacrylate, 2-hydroxy propyl acrylate, 2-hydroxy propyl methacrylate may also be used.

With respect to the polymers (d) and (g) which have an organic acid group at the side chain, mention is made of organic acids bearing vinyl resins, polyester resins, oil modified alkyd resins, fatty acid modified alkyd resins and/or epoxy resins.

It should be noted that in the resulting co-polymer, not all the organic acid side groups need to contain a metal ester bond; some of the organic acid side groups may be left unreacted in the form of free acid, if desired.

The weight average molecular weight of the metal-containing co-polymer is generally in the range of from 1,000 to 150,000, such as in the range of from 3,000 to 100,000, preferably in the range of from 5,000 to 60,000.

Although a number of different methods for determining the weight average molecular weight of the polymer in question will be known to the person skilled in the art, it is preferred that the weight average molecular weight is determined in accordance with the GPC-method described at page 34 in WO 97/44401.

In another interesting embodiment of the invention the coating composition further comprises an amount of an organic ligand at least equal to the ligand-to-metal co-ordination ratio of 1:1, said organic ligand being selected from the group consisting of aromatic nitro compounds, nitriles, urea compounds, alcohols, phenols, aldehydes, ketones, carboxylic acids and organic sulphur compounds, whereby the co-polymer defined above forms a polymer complex with the organic ligand in situ.

Thus, if the above-defined co-polymer is considered as a hybrid salt then, by coordinating an organic ligand to each metal atom, the ion-association of the hybrid salt is retarded significantly to have a lower viscosity in a solution compared to the corresponding solution not containing the organic ligand. Furthermore, improvements may be found both in the sustained release of metal ions and the film consumption rate. Another important advantage is the fact that the complex hybrid salt is no longer reactive with conventional antifouling agents and pigments such as cuprous oxide, zinc oxide and the like. Therefore, the coating composition of the present invention is compatible with the conventional antifouling agents and pigments.

Examples of monobasic organic acids usable for forming the hybrid salt include monocarboxylic acids such as acetic, propionic, butyric, lauric, stearic, linolic, oleic, naphthenic, chloroacetic fluoroacetic, abietic, phenoxyacetic, valeric, dichlorophenoxyacetic, benzoic or napthoic acid; and monosulphonic acids such as benzenesulphonic acid, p-toluenesulphonic acid, dodecylbenzenesulphonic acid, naphthalenesulphonic or p-phenylbenzenesulforic acid.

A preferred method for producing the polymeric hybrid salt has been disclosed in Japanese Patent Kokai No. 16809/1989. According to this method, copolymers containing pendant acid groups are reacted with a metal salt of a low boiling point-monobasic organic acid and a high boiling point-monobasic organic acid simultaneously to form a hybrid salt in which both the polymer pendant acid anion and the high boiling point-monobasic acid anion are bound to the same metal cation. For example, a hybrid copper salt with the polymeric acid and naphthenic acid may be obtained by reacting the polymeric acid with cupric acetate and naphthenic acid.

The polymer hybrid salts thus produced take a pseudo-cross-linked form due to ion-association and, therefore, have a relatively high viscosity in solutions. However, the viscosity may be decreased significantly by co-ordinating a further ligand to the hybrid salt as described herein. The resulting polymer complex thus formed also exhibits a relatively constant rate both in metal release and film consumption when applied as an antifouling coating film.

Organic ligands used for this purpose are selected from the group consisting of aromatic nitro compounds, urea compounds, nitriles, alcohols, phenols, aldehydes, ketones, carboxylic acids, and organic sulphur compounds. The organic ligands are not limited to unidentate ligands but also include polydentate ligand containing a plurality of identical or different ligating atoms in the ligand molecule.

Specific examples of such ligands include aromatic nitro, compounds such as nitrobenzene; nitriles such as isophthalonitrile; urea compounds such as urea, thiourea, N-(3,4-dichlophenyl)-N'-methoxy-N'-methylurea or N-(3,4-dichlorophenyl)-N', N'-dimethylurea; alcohols such as butanol, octanol or geraniol; phenols such as hydroquinone, hydroquinone monomethyl ether, nonylphenol or BHT; aldehydes such as acetaldehyde or propionaldehyde; ketones such as acetylacetone, acetophenone or 2-amino-3-chloro-1,4-naphthoquine; carboxylic acids such as acetic acid, propionic acid, benzoic acid, lactic acid, malic acid, citric acid, tartaric acid or glycine; and sulphur compounds such as thiophene and its derivatives, n-propyl p-toluenesulphonate, mercaptobenzothiazole, dimethyldithiocarbamate or benzeneisothiocyanate. Some of these ligands may be used for antifouling purposes in conventional antifouling coating compositions.

The amount of organic ligand for complexing the polymer hybrid salt should be at least equal to the ligand-to-metal co-ordination ratio of 1 : 1. The maximum will be such an amount to saturate the co-ordination number of a particular metal used. For example, when a metal species having a coordination number of 4 is used, one or two moles of unidentate ligands or one mole of bidentate ligand may be co-ordinated to the metal atom.

The organic ligands are incorporated to a solution or varnish of the polymer hybrid salt to form a polymer complex in situ. The presence of excessive amounts of the organic ligands may be tolerated unless coating films are adversely affected such as occurrence of cracks or blisters when soaked in saline. The complexed copolymer may have a metal content from 0.3 to 20 %, preferably from 0.5 to 15 % by weight.

Examples of such further binder components are: oils such as linseed oil and derivatives thereof, castor oil and derivatives thereof, soy bean oil and derivatives thereof; and other polymeric binder components such as saturated polyester resins; polyvinylacetate, polyvinyl butyrate, polyvinylchloride-acetate, copolymers of vinyl acetate and vinyl isobutyl ether; vinylchloride; copolymers of vinyl chloride and vinyl isobutyl ether; alkyd resins or modified alkyd resins; hydrocarbon resins such as petroleum fraction condensates; chlorinated polyolefines such as chlorinated rubber, chlorinated polyethylene, chlorinated polypropylene; styrene copolymers such as styrene/butadiene copolymers, styrene/methacrylate and styrene/acrylate copolymers; acrylic resins such as homopolymers and copolymers of methyl methacrylate, ethyl methacrylate, n-butyl methacrylate, isobutyl methacrylate and isobutyl methacrylate; hydroxy-acrylate copolymers; polyamide resins such as polyamide based on dimerised fatty acids, such as dimerised tall oil fatty acids; cyclised rubbers; epoxy esters; epoxy urethanes; polyurethanes; epoxy polymers; hydroxy-polyether resins; polyamine resins; etc., as well as copolymers thereof.

It should be understood that the group of other polymeric binder components may include polymeric flexibirisers such as those generally and specifically defined in WO 97/44401 that is hereby incorporated by reference.

The dry matter of such further binder components is typically 0-10% by wet weight.

### Multifunctional cross-linking agent.

The multifunctional cross-linking agent is chitosan or comprises the following structure:

A-L-B

wherein A and B are functional groups as described herein and L is a linker group. In a preferred embodiment A and B are the same. The linker group is a selected from alkylene and dextran. The alkylene group may be linear [e.g. -(CH₂)₃-] or branched alkyl group [e.g. -CH₂-CH(CH₃)-CH₂-] and may contain up to 10 carbon atoms. Preferred alkylene groups contain up to 6 carbon atoms. Preferably the alkyl groups contain up to 5 carbon atoms. More preferably the alkyl groups contain up to 4 carbon atoms. Preferred alkyl groups are methylene, ethylene, propylene, butylene.

Preferably the multifunctional cross-linking agent comprises two of the same functional groups. The multifunctional cross-linking agent comprises two functional groups selected from alcohol, aldehyde, imide, cyanate, isocyanate.

Preferably the multifunctional cross-linking agent comprises two functional groups selected from alcohol, aldehyde and isocyanate.

Preferably the multifunctional cross-linking agent is selected from glutaraldehyde, glyoxal, dextran polyaldehyde, diisocyanates, 2,3-pentadione, 2,4-pentadione, 2,4-hexadione, 3,4-hexedione, 3-methyl-2,4-pentadione, 3-ethyl-2,4- pentadione polyazetidine and mixtures thereof.

Preferably the multifunctional cross-linking agent comprises two functional groups selected from alcohol and aldehyde.

Preferably the multifunctional cross-linking agent comprises two aldehyde functional groups.

Preferably the multifunctional cross-linking agent is glutaraldehyde. Preferably the multifunctional cross-linking agent is chitosan.

### Cross-linked enzyme crystal or cross-linked enzyme aggregate.

Cross-linked enzyme crystals (also known as CLECs) or cross-linked enzyme aggregates (also known as CLEAs) comprises an enzyme crystal or an enzyme aggregate that is cross-linked with a multifunctional cross-linking agent.

In general, the particle size of the CLECs and CLEAs is small enough that it does not interfere with the paint properties (i.e polishing and smoothness). Preferably the particles size is less than 75 micrometer, more preferably less than 60 micrometer, more preferably less than 40 micrometer, more preferably less than 30 micrometer, most preferably less than 20 micrometer.

The particle size range of the CLECs and CLEAs is preferably from 0.1 micrometer to 75 micrometer, more preferably from 0.2 micrometer to 60 micrometer, more preferably from 0.5 micrometer to 40 micrometer, more preferably from 1.0 micrometer to 30 micrometer, most preferably from 2.0 micrometer to 20 micrometer.

The CLECs and CLEAs may be ground down to achieve this size.

Preferably the enzyme is selected from hydrolases, oxidoreductases, transferases, lyases and isomerases.

Preferably the enzyme is selected from a protease, hexose oxidase, glucose oxidase and alcohol dehydrogenase (ADH).

Preferred CLEAs and CLECs may belong to the enzyme types described below. Enzymes that have anti-fouling activity by themselves, or produce an anti-fouling compound by acting on a substrate, or are part of a coupled reaction that produces an anti-fouling compound are preferred choices. List 1 provides a list of enzyme types that have been shown or postulated to have antifouling effect or produce an anti-fouling compound (Kristensen et al 2008, Biotechnology Advances 26, 471-481).

**List 1: Enzymes shown or postulated to have antifouling activity**

| **EC-number** | **Enzyme** |
|---|---|
| **1** | **Oxidoreductases** |
| 1.1.3 | Oxygen as acceptor, oxidases |
| 1.3 | Acting on the CH-CH group of donors |
| 1.10.3 | Acting on diphenols and related substances as donors, oxygen as acceptor |
| 1.11.1 | Peroxidases |
| **2** | **Transferases** |
| 2.6.1 | Transaminase |
| **3** | **Hydrolases** |
| 3.1 | Esterases |
| 3.1.1 | Acting on carboxylic esters |
| 3.1.3 | Phosphoric monoester hydrolases, the phosphatases |
| 3.2 | Glycosylases |
| 3.2.1 | Hydrolysing *O*- or *S*-glycosyl compounds |
| 3.4.11 | Aminopeptidase |
| 3.4.17 | Carboxypeptidase |
| 3.4.21-25/3.4.99 | Endopeptidase, protease |
| 3.4.21 | Serine-endopeptidase |
| 3.4.22 | Cystein-endopeptidase |
| 3.4.24 | Metalloendopeptidase |
| 3.5.1 | Acylases. Acting on carbon-nitrogen bonds, other than peptide bonds, in linear amides |
| **4** | **Lyases** |
| 4.2.2 | Carbon-Oxygen Lyases acting on Polysaccharides |
| **5** | **Isomerases** |
| **6** | **Ligases** |

Preferably the enzyme is a lipase. Preferably the lipase is selected from Candida antarctica lipase isoform A (Lipase, Triacylglycerol hydrolase, EC 3.1.1.3), Candida antarctica lipase isoform B (Lipase, Triacylglycerol hydrolase, EC 3.1.1.3), Candida rugosa lipase (Lipase, Triacylglycerol hydrolase, EC 3.1.1.3), Thermomyces lanuginosus lipase (Lipase, Triacylglycerol hydrolase, EC 3.1.1.3), and Rhizomucor miehei lipase (Lipase, Triacylglycerol hydrolase, EC 3.1.1.3).

Many of these lipases are commercially available as cross-linked enzyme aggregates (CLEAs). Preferably the CLEA is selected from lipase CLEAs, more prefereably CLEA from Candida antarctica lipase isoform A (Lipase, Triacylglycerol hydrolase, EC 3.1.1.3), CLEA from Candida antarctica lipase isoform B (Lipase, Triacylglycerol hydrolase, EC 3.1.1.3), CLEA from Candida rugosa lipase (Lipase, Triacylglycerol hydrolase, EC 3.1.1.3), CLEA from Thermomyces lanuginosus lipase (Lipase, Triacylglycerol hydrolase, EC 3.1.1.3), or CLEA from Rhizomucor miehei lipase (Lipase, Triacylglycerol hydrolase, EC 3.1.1.3).

Preferably the enzyme is an esterase. Preferably the esterase is selected from *Bacillus subtilis* Esterase BS2 (Esterase, Carboxylic ester hydrolase, EC 3.1.1.3) or *Bacillus subtilis* Esterase BS3 (Esterase, Carboxylic ester hydrolase, EC 3.1.1.3).

Also preferably the CLEAs are esterase CLEAs, more preferably *Bacillus subtilis* Esterase BS2 CLEA (Esterase, Carboxylic ester hydrolase, EC 3.1.1.3) or *Bacillus subtilis* Esterase BS3 CLEA (Esterase, Carboxylic ester hydrolase, EC 3.1.1.3).

A number of CLEAs are commercially available from, for instance, CLEA technologies (Julianalaan, Delft, The Netherlands).

Preferably the enzyme is a protease. Preferably, the protease is a serine protease. Preferably the protease is a Subtilisin. Preferably the protease is selected from Alcalase (Subtilisin, serine endoprotease EC 3.4.21.62), Savinase (Subtilisin, serine endoprotease EC 3.4.21.62), Esperase (Subtilisin, serine endoprotease EC 3.4.21.62), Papain (Cysteine protease, EC 3.4.22.2), genetically modified bacterial serine endoprotease, serine protease derived from a genetically modified strain of Bacillus subtilis, serine protease (EC 3.4.21.62) derived from Bacillus licheniformis and mannanase (EC 3.2.1.78). Preferably, the enzyme is a serine protease selected from those obtained or obtainable from *B. subtilis, B. lentus, B. licheniformis* and *B. clausii.* More preferably, the enzyme is a protease obtained or obtainable from *B. licheniformis.*

Preferably the CLEAs are protease CLEAs, more preferably of Subtilisin.

Preferably proteases CLEAs are selected from Alcalase CLEA (Subtilisin, serine endoprotease EC 3.4.21.62), Savinase CLEA (Subtilisin, serine endoprotease EC 3.4.21.62), Esperase CLEA (Subtilisin, serine endoprotease EC 3.4.21.62), or Papain CLEA (Cysteine protease, EC 3.4.22.2),.

Many of these protease products are commercially available from Genencor, for example: Properase 1600L (Genetically modified bacterial serine endoprotease), Purafect 4000L (serine protease derived from a genetically modified strain of Bacillus subtilis), Protex 6L (serine protease (EC 3.4.21.62) derived from Bacillus licheniformis) and Mannastar (mannanase EC 3.2.1.78)

Other preferred enzymes are oxidoreductases, more preferably Hexose oxidase (EC 1.1.3.5) and Glucose oxidase (EC 1.1.3.4).

Preferably oxidoreductases are peroxidase belonging within the classification group EC 1.11.1, any laccase belonging within EC 1.10.3.2, any catechol oxidase belonging within EC 1.10.3.1, any bilirubin oxidase belonging within EC 1.3.3.5 or any monophenol monooxygenase belonging within EC 1.14.99.1 or any oxidase belonging within EC 1.3.3.

Preferably the enzyme is a haloperoxidase. Preferred haloperoxidases are vanadium chloroperoxidase, even more preferably the P395D / L241 V / T343A mutant of *C. inaequalis* vanadium chloroperoxidase (Renirie et al, Journal of Applied Microbiology 105 (2008) 264-270)

Laccase and Laccase Related Enzymes

Preferred laccase enzymes and/or laccase related enzymes are enzymes of microbial origin. The enzymes may be derived from plants, bacteria or fungi (including filamentous fungi and yeasts).

Suitable examples from fungi include a laccase derivable from a strain of Aspergillus, Neurospora, e.g., N. crassa, Podospora, Botrytis, Collybia, Fomes, Lentinus, Pleurotus, Trametes, e.g., T. villosa and T. versicolor, Rhizoctonia, e.g., R. solani, Coprinus, e.g., C. cinereus, C. comatus, C. friesii, and C. plicatilis, Psathyrella, e.g., P. condelleana, Panaeolus, e.g., P. papilionaceus, Myceliophthora, e.g., M. thermophila, Schytalidium, e.g., S. thermophilum, Polyprous, e.g., P. pinsitus, Phlebia, e.g., P. radita (WO 92/01046), or Coriolus, e.g., C. hirsutus (JP 2-238885).

Suitable examples from bacteria include a laccase derivable from a strain of Bacillus.

A laccase derived from Coprinus, Myceliophthora, Polyporus, Scytalidium or Rhizoctinia is preferred; in particular a laccase derived from Coprinus cinereus, Myceliophthora thermophila, Polyporus pinsitus, Scytalidium thermophilum or Rhizoctonia solani.

The laccase or the laccase related enzyme may furthermore be one which is producible by a method comprising cultivating a host cell transformed with a recombinant DNA vector which carries a DNA sequence encoding said laccase as well as DNA sequences encoding functions permitting the expression of the DNA sequence encoding the laccase, in a culture medium under conditions permitting the expression of the laccase enzyme, and recovering the laccase from the culture.

Preferred hydrolases are arylesterase (aryl-ester hydrolase EC 3.1.1.2) commercially available from Genencor as PrimaGreen™.

Preferably the enzyme is alcohol dehydrogenase (ADH). Preferred are ADH enzymes of bacterial origin, especially Pseudogluconobacter saccharoketogenes ADH, Lactobacillus kefir ADH, Thermoanaerobium brockii ADH and Escherichia coli aldose sugar dehydrogenase (ASD).

The activity of some ADH enzymes is dependent on the presence of a redox cofactor. Such ADH enzymes are referred to in this specification as 'redox cofactor-dependent alcohol dehydrogenases' and may be used in the composition.

When redox cofactor-dependent alcohol dehydrogenases are used in the composition, the composition further comprises a redox cofactor. Preferably the redox cofactor is selected from nicotinamide adenine dinucleotide (NAD⁺) or nicotinamide adenine dinucleotide phosphate (NADP⁺) and a quinine cofactor. Preferably the quinone cofactor is selected from pyrroloquinoline quinone (PQQ), tryptophyl tryptophanquinone (TTQ), topaquinone (TPQ), and lysine tyrosylquinone (LTQ).

Preferably, the ADH is selected from a quinone redox cofactor-dependent ADH and a nicotinamide adenine dinucleotide (NAD⁺) or nicotinamide adenine dinucleotide phosphate (NADP⁺) redox cofactor-dependent ADH.

Quinone- or NAD⁺/NADP⁺ redox cofactor-dependent alcohol dehydrogenases are capable of inhibiting or reducing the formation of biofilm (fouling), particularly bacterial biofilm.

Some alcohol dehydrogenases, especially ADHs falling within enzyme class (E.C.) 1.1.1, particularly E.C. 1.1.1.1 or E.C. 1.1.1.2, as well as those falling within enzyme class (E.C.) 1.2.1, generally function in conjunction with the redox cofactor nicotinamide adenine dinucleotide (NAD⁺) or nicotinamide adenine dinucleotide phosphate (NADP⁺), the reaction proceeding with the reduction of NAD⁺ or NADP⁺ to NADH or NADPH respectively.

Other alcohol dehydrogenases, especially those falling within enzyme class EC 1.1.5, particularly EC 1.1.5.2, generally function in conjunction with a quinone redox cofactor, particularly a quinone cofactor selected from pyrroloquinoline quinone (PQQ), tryptophyl tryptophanquinone (TTQ), topaquinone (TPQ), and lysine tyrosylquinone (LTQ), the quinone group being reduced to a di- or tetrahydroquinone group during the reaction.

NAD⁺ / NADP⁺ cofactor- or quinone cofactor-dependent alcohol dehydrogenase are ADH enzymes which function in conjunction with a redox cofactor selected from nicotinamide adenine dinucleotide (NAD⁺), nicotinamide adenine dinucleotide phosphate (NADP⁺) or a quinone cofactor, particularly a quinone cofactor selected from pyrroloquinoline quinone (PQQ), tryptophyl tryptophanquinone (TTQ), topaquinone (TPQ), and lysine tyrosylquinone (LTQ).

Preferably, the ADH is selected from enzyme class (E.C.) 1.1, especially from subclass 1.1.1 or 1.1.5. Of the ADH enzymes in subclass 1.1.1, preferred are those in classification 1.1.1.1 or 1.1.1.2. Of the ADH enzymes in subclass 1.1.5, preferred are those in classification 1.1.5.2.

In another embodiment, the ADH is selected from the aldehyde reductases of enzyme class (E.C.) 1.2.1. These enzymes catalyse the opposite reaction of the ADHs and it is known that many enzymes can work as catalyst for both the forward and the reverse reaction depending on conditions.

In a further aspect, the cross-linked enzyme crystals or cross-linked enzyme aggregates comprise subtilisin crystals or aggregates cross-linked with chitosan.

### Further features of the composition

The composition is an anti-fouling composition.

In a further aspect, the composition further comprises a substrate wherein the cross-linked enzyme crystal or cross-linked enzyme aggregate generates an anti-foulant compound when acting on the substrate. A preferred anti-fouling compound is hydrogen peroxide.

Preferably the substrate/cross-linked enzyme crystal or cross-linked enzyme aggregate comprises a substrate/enzyme combination that is selected from glucose/hexose oxidase, glucose/glucose oxidase, L amino acid/L amino acid oxidase, galactose/galactose oxidase, lactosel/β-galactosidase/hexose oxidase, lactose/ β-galactosidase/glucose oxidase, 2-deoxyglucose/glucose oxidase, pyranose/pyranose oxidase, and mixtures thereof. Clearly, the enzyme from these substate/enzyme combinations is cross-linked before being used in the composition.

In a further aspect, the composition further comprises a first enzyme and a first substrate, wherein action of the first enzyme on the first substrate provides a second substrate; and wherein the cross-linked enzyme crystal or cross-linked enzyme aggregate generates an anti-foulant compound when acting on the second substrate.

### First Enzyme

Preferably, the first enzyme is selected from exo-acting enzymes capable of degrading oligomeric or polymeric substrates to monomeric units, e.g. β-galactosidase, peptidase; glucoamylase, and mixtures thereof.

Preferably the first enzyme is glucoamylase (EC 3.2.1.3). One skilled in the art will appreciate that glucoamylase is also known as amyloglucosidase.

Preferably the first enzyme is glucoamylase from *Trichoderma reesei* or glucoamylase from *Humicola grisea.* Preferably the first enzyme is glucoamylase from *Trichoderma reesei.* Preferably the first enzyme is glucoamylase from *Trichoderma reesei* prepared as described in US 2006/0094080. Preferably the first enzyme is glucoamylase from *Humicola grisea.*

Preferably the first enzyme is cross-linked with a multifunctional cross-linking agent.

### First Substrate

The provision of a first substrate is advantageous because it provides for sustained and/or prolonged release of the second substrate by action of the first enzyme on the first substrate.

Preferably, the first substrate is selected from oligomers and polymers of substrates for oxidative enzymes, starch, lactose, cellulose, dextrose, peptide, inulin, and mixtures thereof.

Preferably the first substrate is starch. Native starch is particularly preferred as a first substrate. Native starch provides densely packed granules which are particularly amenable to suspension/incorporation in surface coatings. Moreover, Native starch is water insoluble.

Cellulose is also particularly preferred as a first substrate. Cellulose is a common component in paint and use of cellulose as a first substrate reduces the number of additional components which must be added to a paint composition.

### Cross-linked enzyme crystal or cross-linked enzyme aggregate

In one aspect the composition comprises a cross-linked enzyme crystal or cross-linked enzyme aggregate and further comprises a first enzyme and a first substrate. In this apsect, preferably the cross-linked enzyme crystal or cross-linked enzyme aggregate comprise an oxidase enzyme. Preferably, the cross-linked enzyme crystal or cross-linked enzyme aggregate comprises an enzyme selected from glucose oxidase, L-amino acid oxidase, D-amino oxidase, galactose oxidase, hexose oxidase, pyranose oxidase, malate oxidase, cholesterol oxidase, arylalcohol oxidase, alcohol oxidase, lathosterol oxidase, aspartate oxidase, amine oxidase, D-glutamate oxidase, ethanolamine oxidase, NADH oxidase, urate oxidase (uricase) and mixtures thereof. Preferably, the cross-linked enzyme crystal or cross-linked enzyme aggregate comprises an enzyme selected and glucose oxidase, hexose oxidase and a mixture thereof.

Preferably, in one aspect the cross-linked enzyme crystal or cross-linked enzyme aggregate comprises glucose oxidase. Preferably, the glucose oxidase is glucose oxidase from *Aspergillus niger.* Preferably, the glucose oxidase is glucose oxidase from *Aspergillus niger* and may be prepared as described in US5783414. Preferably, the glucose oxidase is glucose oxidase GC199 available from Genencor International Inc, Rochester, NY, USA.

Preferably, in one aspect the cross-linked enzyme crystal or cross-linked enzyme aggregate comprises hexose oxidase. Preferably, the hexose oxidase is obtainable or is obtained from *Chondrus cripus.* In one aspect the hexose oxidase enzyme is an enzyme covered by the disclosure of EP-A-0832245

### Second Substrate

Preferably, the second substrate is selected from peptides, L-amino acid, and carbohydrates/sugars, including hexoses, preferably glucose, galactose, lactose, 2-deoxyglucose, pyranose, xylan, cellulose, inulin, starch, dextran, pectin, and mixtures thereof.

### Enzymes/Substrates

In a preferred embodiment the second substrate/cross-linked enzyme crystal or cross-linked enzyme aggregate comprises a second substrate/enzyme combination selected from glucose/hexose oxidase, glucose/glucose oxidase, L amino acid/L amino acid oxidase, galactose/galactose oxidase, lactose/β-galactosidase/hexose oxidase, lactose/ β-galactosidase/glucose oxidase, 2-deoxyglucose/glucose oxidase, pyranose/pyranose oxidase, and mixtures thereof. Clearly, the enzyme from these second substate/enzyme combinations is cross-linked before being used in the composition.

Preferably the first substrate/first enzyme/cross-linked enzyme crystal or cross-linked enzyme aggregate combination is starch/glucoamylase/hexose oxidase CLEC or CLEA. Preferably, the anti-fouling compound is hydrogen peroxide.

In one preferred aspect the first enzyme is present in an amount such that its activity is less than the activity of the enzyme cross-linked with a multifunctional cross-linking agent enzyme. Thus, the first enzyme will limit the rate of formation of anti-foulant compound. Thus in one preferred aspect the activity ratio of first enzyme:cross-linked enzyme crystal or cross-linked enzyme aggregate is greater than 1:1, preferably at least 1:2, preferably at least 1:10, preferably at least 1:20, preferably at least 1:50, preferably at least 1:100, preferably at least 1:1000, preferably at least 1:10000. The activity is defined as release of substrate for the first enzyme and turnover of that substrate for the second enzyme in the given conditions (i.e. sea water for marine applications).

Preferably, the composition and/or coating further comprises a pigment. Suitable pigments may be selected from inorganic pigments, such as titanium dioxide, ferric oxide, silica, talc, or china clay, organic pigments such as carbon black or dyes insoluble in aqueous media, preferably sea water, derivatives and mixtures thereof.

The composition and/or coating of the present invention may further comprise a binder.

The composition and/or coating of the present invention may contain plasticisers, rheology characteristic modifiers, other conventional ingredients and mixtures thereof.

The composition of the present invention, particularly when formulated as a coating, may further comprise an adjuvant conventionally employed in compositions used for protecting materials exposed to an aquatic environment. Examples of suitable adjuvants include additional fungicides, auxiliary solvents, processing additives such as defoamers, fixatives, plasticisers, UV-stabilizers or stability enhancers, water soluble or water insoluble dyes, color pigments, siccatives, corrosion inhibitors, thickeners or anti-settlement agents such as carboxymethyl cellulose, polyacrylic acid or polymethacrylic acid, anti-skinning agents, derivatives and mixtures thereof,

### Process for the preparation of a composition

Where the composition is an oil-based paint, preferably the process includes step (b) drying the cross-linked enzyme crystal or the cross-linked enzyme aggregate. Drying the cross-linked enzyme crystal or the cross-linked enzyme aggregate makes the enzyme miscible with an organic solvent.

Preferably the cross-linked enzyme crystal or the cross-linked enzyme aggregate is freeze dried or spray dried.

Suitably the cross-linked enzyme crystal or the cross-linked enzyme aggregate is freeze dried.

Suitably the cross-linked enzyme crystal or the cross-linked enzyme aggregate is spray dried.

Preferably the process includes the optional step (c). Preferably the hydrophobicity of the surface of the cross-linked enzyme crystal or cross-linked enzyme aggregate is increased by addition of a surfactant.

### Uses

Also described is the use of a cross-linked enzyme crystal or a cross-linked enzyme aggregate to inhibit fouling. Preferaby, the cross-linked enzyme crystal or a cross-linked enzyme aggregate is used to inhibit fouling in a marine environment. Preferably, the cross-linked enzyme crystal or a cross-linked enzyme aggregate is used to inhibit fouling caused by biofilm formation. This use relates to a cross-linked enzyme crystal or cross-linked enzyme aggregate that may comprise any of the features relating to crystals, aggregates, the enzyme and the multifunctional cross-linking agent described herein. Preferably, the multifunctional cross-linking agent used comprises two or more functional groups selected from alcohol, aldehyde, imide, cyanate, isocyanate and mixtures thereof.

Preferably the enzyme used is selected from hydrolases, oxidoreductases, transferases, lyases and isomerases. More preferably the enzyme used is selected from a protease, hexose oxidase, glucose oxidase and alcohol dehydrogenase (ADH). Preferably the protease is a subtilisin.

### Further Components/Aspects

Preferably the enzyme is present in an effective amount to reduce or prevent fouling of a surface coated with the composition.

The compositions of the present invention may be formulated as coatings, lacquers, stains, enamels and the like, hereinafter referred to generically as "coating(s)".

Thus, in one aspect the present invention provides a coating consisting of a composition as defined herein.

Preferably, the coating is formulated for treatment of any surface that is in contact with water ranging from occasional humidity to constant immersion in water and which thus has the potential to be fouled. More preferably, the surface is selected from outdoor wood work, external surface of a central heating or cooling system, bathroom walls, hull of a marine vessel or any off-shore installations, and surfaces in food production/packaging and/or any other industrial processes.

The coating may include a liquid vehicle (solvent) for dissolving or suspending the composition.

The liquid vehicle may be selected from any liquid in which any essential component of the composition may be suitably suspended of dissolved. In particular, the liquid should be a suitable vehicle for the essential enzyme(s) and/or anti-foulant compound, allowing the appropriate activity of same. Suitable liquid vehicles are disclosed in US-A-5071479 and include water and organic solvents including aliphatic hydrocarbons, aromatic hydrocarbons, such as xylene, toluene, mixtures of aliphatic and aromatic hydrocarbons having boiling points between 100 and 320°C, preferably between 150 and 230°C; high aromatic petroleum distillates, e.g., solvent naptha, distilled tar oil and mixtures thereof; alcohols such as butanol, octanol and glycols; vegetable and mineral oils; ketones such as acetone; petroleum fractions such as mineral spirits and kerosene, chlorinated hydrocarbons, glycol esters, glycol ester ethers, derivatives and mixtures thereof.

The liquid vehicle may contain at least one polar solvent, such as water, in admixture with an oily or oil-like low-volatility organic solvent, such as the mixture of aromatic and aliphatic solvents found in white spirits, also commonly called mineral spirits.

The vehicle may typically contain at least one of a diluent, an emulsifier, a wetting agent, a dispersing agent or other surface active agent. Examples of suitable emulsifiers are disclosed in US-A-5071479 and include nonylphenol-ethylene oxide ethers, polyoxyethylene sorbitol esters or polyoxyethylene sorbitan esters of fatty acids, derivatives and mixtures thereof.

In one aspect the present invention provides a marine anti-foulant consisting of a composition as defined herein.

Preferably, the composition or coating is self-polishing.

The composition of the present invention can be provided as a ready-for-use product or as a concentrate. The ready-for-use product may be in the form of a powder, an oil solution, oil dispersion, emulsion, or an aerosol preparation. The concentrate can be used, for example, as an additive for coating, or can be diluted prior to use with additional solvents or suspending agents.

An aerosol preparation according to the invention may be obtained in the usual manner by incorporating the composition of the present invention comprising or suspended in, a suitable solvent, in a volatile liquid suitable for use as a propellant, for example the mixture of chlorine and fluorine derivatives of methane and ethane commercially available under the trademark "Freon", or compressed air.

As discussed in US-A-5071479 the composition and/or coating of the present invention may include additional ingredients known to be useful in preservatives and/or coatings. Such ingredients include fixatives such as carboxymethylcellulose, polyvinyl alcohol, paraffin, co-solvents, such as ethylglycol acetate and methoxypropyl acetate, plasticisers such as benzoic acid esters and phthlates, e.g., dibutyl phthalate, dioctyl phthalate and didodecyl phthalate, derivatives and mixtures thereof. Optionally dyes, color pigments, corrosion inhibitors, chemical stabilizers or siccatives (dryers) such as cobalt octate and cobalt naphthenate, may also be included depending on specific applications.

The composition and/or coating of the present invention can be applied by any of the techniques known in the art including brushing, spraying, roll coating, dipping and combinations thereof.

Compositions of the present invention can be prepared simply by mixing the various ingredients at a temperature at which they are not adversely affected. Preparation conditions are not critical. Equipment and methods conventionally employed in the manufacture of coating and similar compositions can be advantageously employed.

In a further aspect, the present invention relates to a method for inhibiting biofilm formation on an article comprising contacting the article with an effective amount of a composition as defined herein.

In a further aspect, the present invention relates to a method for inhibiting biofilm formation on an article comprising applying to the article with an effective amount of a composition as defined herein.

These methods for inhibiting biofilm formation relate to methods comprising a cross-linked enzyme crystal or cross-linked enzyme aggregate that may further comprise any of the features relating to crystals, aggregates, the enzyme and the multifunctional cross-linking agent described herein.

In a further aspect, the present invention relates to an article provided with an antifouling composition as defined herein. Preferably, the antifouling composition is provided as a coating on the article.

Preferably, the article is selected from a hull of a marine vessel, a medical device, a contact lens, food processing apparatus, paper manufacturing apparatus, oil recovery and processing apparatus, an offshore installation (for example an oil rig or production platform), drinking water dispensing apparatus, a pipeline, a cable, a fishing net, a pillar of a bridge, the external surface of a central heating system, a port building or installation.

The present invention will now be described in further detail by way of example only with reference to the accompanying figures in which:-
Figure 1 shows a schematic overview of the structural component chemistry of extracellular polymeric substances (EPS) involved in bacterial biofilms;
Figure 2 shows crystals of subtilisin protease;
Figure 3 shows a bar chart of protease activity in-paint;
Figure 4 shows panels from a field raft trial;

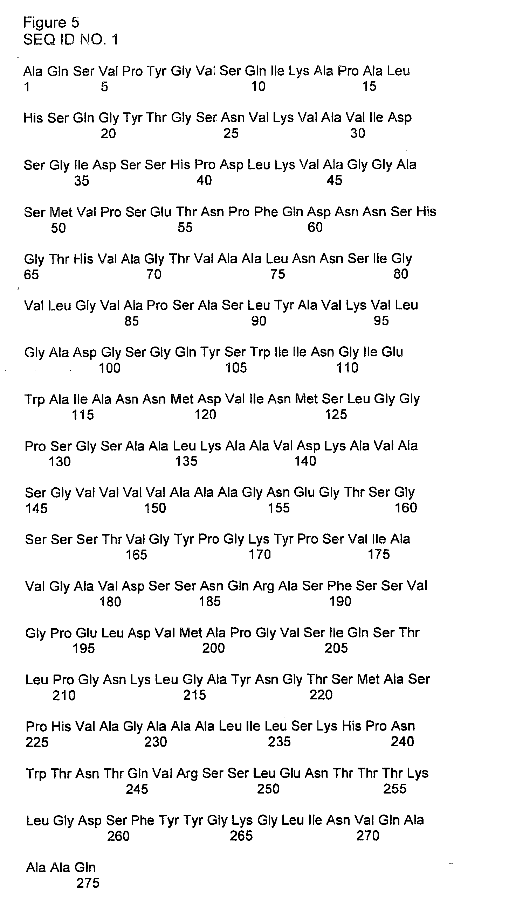

Figure 5 shows the amino acid sequence for SEQ ID No. 1;
Figure 6 shows the catalytic performance of laccases in different systems;
Figure 7 shows the relative catalytic performance of laccases in dried paint;
Figure 8 shows the relative catalytic performance of subtilisin and subtilisin-chitosan complex in dried paint;
Figure 9 shows the catalytic performance of proteases in different systems;
Figure 10 shows the catalytic performance of proteases in dried marine paint;
Figure 11 shows the relative catalytic performance of proteases in dried marine paint;
Figure 12 shows the principal scheme of catalyst activation during incubation in ASW;
and
Figure 13 shows SEM micrographs of proteases.

The present invention will now be described in further detail in the following examples.

### EXAMPLES

### Assays for determining anti-fouling activity

Of particular relevance to this invention are enzymes that posses anti-fouling activity. This activity may range from being a general feature against a broad range of foulants to a specific anti-fouling activity against a single species. Preferably, a coating containing an enzyme in any form (soluble, immobilised, cross-linked, chemically modified) in a concentration by weight of the active enzyme preferably less than 20 % enzyme, more preferably less than 10 % enzyme, and more preferably less than 5 % enzyme, and even more preferably less than 1 % enzyme will show a higher fouling resistance according to the ASTM norm D 6990 - 05 :"Standard Practice for Evaluating Biofouling Resistance and Physical Performance of Marine Coating Systems" than a reference coating without active enzyme at least one of the inspections as described in example 4, without being limitied to the physical location of the in-sea trials. Or when an antifouling activity can be detected using any of the assays according to WO2008/013747 for bacterial fouling or according to Pettitt et al (Biofouling, 2004, 20 (6), pp 299 - 311) for barnacle and algae fouling where a significant change in adherence and/or settlement, and/or motility of the organisms and / or removal is detectable when a concentration by weight of the active enzyme is preferably less than 20 %, more preferably less than 10 %, more preferably less than 5 %, and even more preferably less than 1 %. This is without being limited to the specific strains of the organisms described by WO2008/013747 or Pettitt et al.

### Examples:

The anti-fouling effect of art anti-fouling composition containing cross-linked protease crystals is tested according to the following examples. These Examples show the effectiveness of the present composition at preventing fouling.

### Example 1: Preparation of protease crystals

Crystals of a subtilisin protease with the sequence shown in SEQ ID NO 1 was prepared. The subtilisin is derived from *Bacillus amyloliquefaciens* and may be prepared as described in US 5,441,882.

The aqueous solution which acts as starting material for the method is derived from the fermentation broth produced by the fermentation of an appropriate microorganism. The fermentation procedures for culturing cells and for production of protein are known per se in the art.

Ultra-filtration of the cell free broth was carried out with a polysulfone membrane having a 10 kDa molecular weight cut off in a spiral ultra-filtration unit to provide the ultra filtrate concentrate (UFC). The resultant protease solution was at a concentration of about 100 g/L of active enzyme. The protease concentration can be determined by the method described in Estell et al. (1985) J. Biol. Chem. 260:6518-6521.

The protease containing UFC was mixed with sodium formate in three steps to a final formate concentration of 5 %. Each step lasted 20 min and the temperature was kept at 5 °C throughout the process. The pH was adjusted to 5.5 using either 20 % NaOH or 20 % Formic Acid and 0.1 % crystal seed was added. Crystallization was allowed to proceed for 4 days and a picture of the resulting crystals is shown in figure 2. The slurry was diluted with 5 % formate 0.01 % CaCl₂ solution in a ratio of 1:0.75, and the crystals recovered by centrifugation. The resulting pellet was stored at -20 °C until further use.

### Example 2: Preparation of CLECs (cross-linked enzyme crystals)

Protease crystals were cross-linked with glutaraldehyde to provide solid particles that are insoluble in an aqueous system. Glutaraldehyde was added to the protease crystals obtained in example 1 to a final concentration of 1 % (vol) of the paste and incubated with gentle stirring for 3 hours at 4°C. After this the solution was freeze dried and the obtained material crushed in a mortar to obtain a dry powder with a fine particle size suitable for the paint application.

### Example 3: In-paint activity of CLECs

Protease crystals were added to 4 % (w/v) of a commercial antifouling paint (Mille Light from Hempel A/S) both in the cross-linked and non-cross-linked form. The resulting paint was applied in triplicate and for each replica in two layers at the inside of 6-well polystyrene tissue culture plates. The paint was then allowed to dry for three days at room temperature. Further, a commercial protease containing paint, Coatzyme obtained from BioLocus A/S, Denmark was included in the assay for benchmarking.

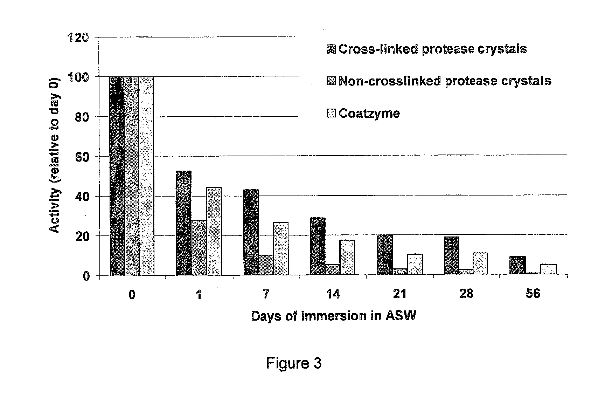

The plates were immersed in large excess of artificial sea water (ASW)(NaCl: 24.0 g/L, MgCl₂ 5.1 g/L, Na₂SO₄ 4.0 g/L, CaCl₂ 1.1 g/L, KCl 0.67 g/L, KBr 0.098 g/L, H₃BO₃ 0.027 g/L, SrCl₂ 0.024 g/L, NaF 0.003 g/L, NaHCO₃ 0.196 g/L). At regular intervals the plates were taken out of the ASW and the protease activity assayed (Fig 3) before the plates were immersed in a fresh batch of ASW. The protease assay was based on the ability of a protease to cleave p-nitroanilide from a synthetic peptide, succinyl-ala-ala-ala-p-nitroanilide (suc-AAApNA) (Sigma S4760), resulting in an increase in absorbance at 405 nm. For the assay, a working substrate solution was prepared by mixing 400 µL of a substrate stock solution (30 mg/mL suc-AAApNA in DMSO) with 19.6 mL buffer solution (0.1M Tris; 0.01M CaCl2; 0.005% Triton X-100; pH 8.6). Three milliliters of the working substrate solution was added to each well coated with paint and the increase in absorbance at 405 nm was used as a measure of enzyme activity. The activity measured after 2 hours of hydration of the paints in ASVV was set to 100 % (day 0, Fig 3). The protease activity for the three coatings were measured at the days indicated. It is concluded that the cross-linked crystals are superior both to the non-cross-linked crystals and the Coatzyme paint in retaining in-paint enzyme activity.

### Example 4: Antifouling properties of CLEC containing paint

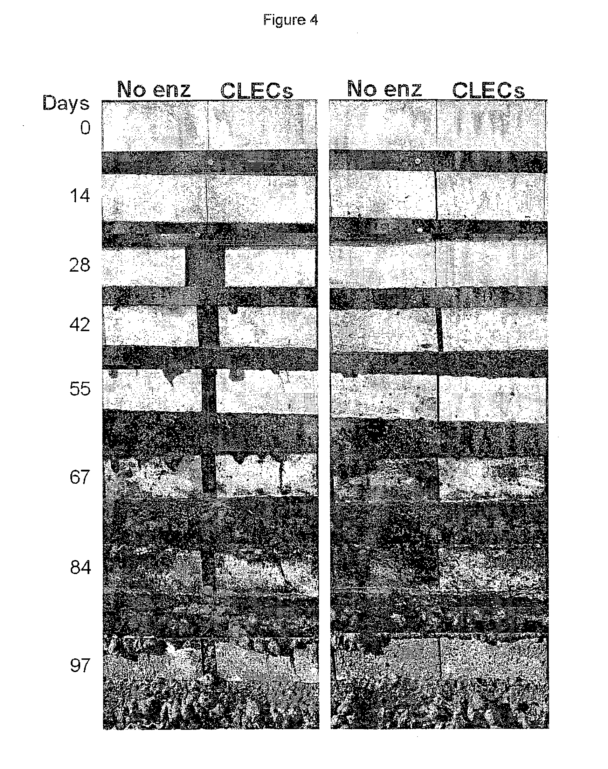

Paint containing protease crystals were prepared as described in example 3 with the exception that only 2% (w/v) cross-linked protease crystals were added to the Mille Light paint. The resulting CLEC paint was applied in duplicate to 15 by 7.5 cm rotor panels and mounted on rafts that were immersed in the North Sea. The raft trial started in July 2008 and ended beginning of November 2008, with an average seawater temperature reported to 17°C throughout the trial period. The rafts were regularly inspected visually for the nature and density of biofouling, and images were taken for documentation (Fig 4). The images in Figure 4 were taken after the days of immersion indicated to the left of panels. The left and right frames are pictures of the duplicates.

The fouling on the panels was quantified and the average of the two duplicates is shown for days 14-84 and for each panel at day 97 in table 1:

**Table 1: Quantification of fouling on panels. GA = Green Algae, B = Barnacles, D=diatoms, yB = young Barnacles (not permanent settling)**

| **Days** | **No enzyme (Mille Light)** | **CLECs** | **Mille Xtra** |
|---|---|---|---|
| 14 | | Slime + yB | Slime + yB |
| 28 | Slime | Slime + yB | Slime |
| 42 | Slime, 5% GA, yB | Slime, yB, y mussel | Slime, 10 % GA, yB |
| 55 | Slime, 5% GA, 10% D, yB | Slime, 2B, yB | Slime, 5-10 % D, 5B, yB |
| 67 | Slime, yB, 5-15 B, 5 % GA, 20 % D | Slime, 5B, 10-15 % D | Slime, yB, 20-30 % D |
| 97_rack1 | Slime, **25% D** | Slime, **5% D,** 5% GA | Slime, 15 % D |
| 97_rack2 | Slime, 10 B, **60 % D,** 10% GA, 1 oyster | Slime, **25%** D, 6B | Slime, 60 % D |

Important observations after 42 days of immersion include green algae development on paints without enzyme, which is not observed on the CLEC paint. The Mille Light paint without enzyme shows more barnacle development than the CLEC paint after 67 days and after 97 days significantly less diatom fouling is observed on the CLEC paint than both reference paints without enzymes.

Overall performance of the paints at day 97 was scored using a method derived from the ASTM norm D6990 where Fouling Resistance (FR) of the panels is scored by subtracting either the coverage in percentage or actual number of organisms counted on each panel (with the exception of slime where a value of 1 is subtracted) from a value of 100 (Table 2). Values between 0 (no antifouling activity at all) and 100 (perfectly clean paint surface) indicate the degree of protection of the individual panels through the trial. The higher the FR rate, the better the antifouling performance.

**Table 2: Fouling resistance (FR) of coatings.**

| | **FR of both panels** | **FR (average)** |
|---|---|---|
| CLEC paint | 89; 68 | 78.5 |
| Mille Light | 74; 18 | 46 |
| Mille Xtra | 84; 49 | 66.5 |

The enzyme containing paint shows a better fouling resistance than both of the reference paints.

### Example 5: In-sea protease activity of CLEC paint

The protease activity of the CLEC paint was assayed in duplicate using a semi-quantitative assay on a panel that has been treated as described in panel 4, but exclusively used for enzyme assays. Fouling was gently cleaned of the panels prior to the assay. The assay was performed as a drop test where 940 µL buffer 1 (100mM Tris, 0.005% Tween 80, pH 8.6) and 50 µL buffer 2 (30 mg N-succinyl-ala-ala-pro-phe-p-nitroanilide dissolved in 300 µL of dimethylsulfoxide (Sigma-Fluka 41650)) was applied to the surface. The time it took to develop a bright colour was determined based on visual inspection using a drop consisting of deionised water as reference. The assay was performed on the Mille Light paint (i.e. no enzyme present) as a negative control since the colour will develop spontaneously over long incubation times.

The results are presented in table 3. Even though a light colour development was observed sometimes for the Mille Light paint, the observed activity in the CLEC paint was significant and detectable even after 97 days of immersion in the sea.

**Table 3: In-sea enzyme activity. The protease activity was determined at the days indicated using a semi-quantitative assay as described in the text. In the semi-quantitative assay short incubation times indicate high activity. ND: not detectable.**

| **Days** | **No enzyme (Mille Light)** | **CLECs** |
|---|---|---|
| 14 | 10 min | 2 min |
| 28 | ND | 5 min |
| 42 | 5 min, light colour | 5 min |
| 55 | 30 min, light colour | 5 min, light colour |
| 67 | ND | 10 min, light colour |
| 97 | ND | 10 min, light colour |

### Example 6: Catalytic activity of laccase-based catalysts

### Materials and Methods

(CLEAs) of laccase from *Tremetes versicolor,* 2,2'-azino-bis(3-ethylbenzthiazoline-6-sulphonic acid), ABTS, and buffer salts were obtained from Sigma-Aldrich. Native laccase from *Tremetes sp.* was obtained form CLEAs Technologies B.V. Mille Light paint from Hempel A/S was used as a blank paint. The artificial sea water (ASW) used contained 547.6 mM NaCl, 56.8 mM MgSO₄x7H₂O and 2.4 mM NaHCO₃, pH 8.2 (Yebra, D. M., Kiil, S., Weinell, C. E., & Dam-Johansen, K. (2006). Parametric study of tin-free antifouling model paint behavior using rotary experiments. Industrial & Engineering Chemistry Research 45, 1636-1649, *Activity* assay). All aqueous solutions were prepared with de-ionised water.

The catalytic activity of catalyst was determined by its ability to oxidized ABTS by monitoring of increase of absorbance at 405 nm by ELISA-reader (Molecular Devices). The signal of absorbance was corrected for the spectrophotometer measurements with the length of cuvette 1 cm and extinction coefficient 35 mM⁻¹ cm⁻¹ (J.D Crowe and S. Olsson App. Environ. Microbiol. 67 (2001) 2088-2094).

In order to monitor the catalytic reaction enzyme powder was dispersed in 10 µl of 100mM sodium acetate, 1% BSA, pH 5.0. Then 160 µl of buffer containing 6.2 mM ABTS were added to the system. The catalytic activity of samples was determined as the production of product in nmol in 1 min by 1 mg of enzyme.

To determine the catalytic activity of laccase in paint, 200 mg of catalyst was dispersed in 400 µl of xylene. Then the mixture was added into 5 ml of paint. The paint/catalyst mixture was then applied to a "Write-on Transparency Film" by brush. The painted films were dried for 24h.

### Results and Discussion

In order to identify initial activity of the catalysts, the screening of their performance in the buffer has been performed (see table 4) As can be seen from the table non-modified laccase has the highest activity. However in ASW catalytic activity of native laccase was not detected at all.

**Table 4: Catalytic activity of laccases in buffer, ASW and after the treatment by xylene.**

| **Enzymes** | **Activity, nmol min⁻¹ mg⁻¹** | | |
|---|---|---|---|
| | **Buffer** | **ASW** | **Xylene** |
| CLEA laccase | 100 | 3 | 122 |
| Native laccase | 746 | ND | 978 |

These results indicate that the pH of ASW is a crucial factor for catalytic performance. At pH 8.2 native laccase is not active, whereas laccase CLEA still displays some activity. However, after immersing the catalyst to the buffer system pH 5.0 catalytic activity was recovered completely.

The tolerance of these enzymes to xylene was also studied. Xylene was chosen as an example of an organic solvent that is used to produce paints. The catalysts were incubated in technical grade xylene for 24 hours. After complete drying of xylene, the catalysts were dispersed in buffer pH 5.0 and catalytic activity was measured. It was found that xylene did not effect the catalytic performance of these laccases. Both the native enzyme and the enzyme aggregates displayed increased catalytic performance. A possible reason for this is that the xylene may dissolve small organic impurities, that may have been absorbed on the protein surface during catalyst production and which can partly inhibit the enzyme performance.

Thus, the results show that laccase can retain residual activity in ASW only in the form of CLEA. To identify the relevance laccase-based catalysts for paint applications different for marine ones, the studies of dried paint containing laccases have been performed in 100mM sodium acetate, 1% BSA, pH 5.0.

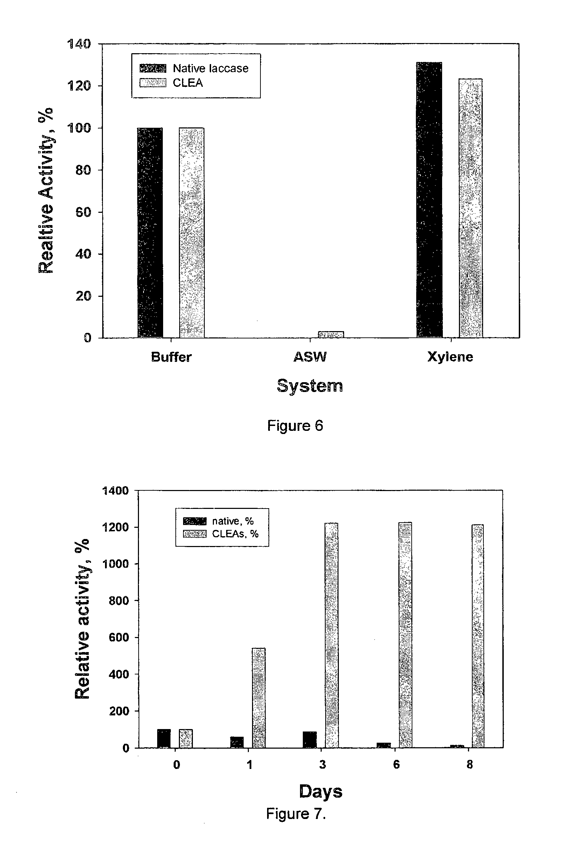

The results are presented in Figure 7. As can be seen from the figure, non-modified laccase rapidly lost catalytic activity in dried paint immersed to the buffer. After 8 days laccase retains only ca. 13 % of activity. In contrast, the catalytic activity of CLEA of laccase increases during the studied period. Already on 3^{rd} day, CLEAS have activity ca. 1200% from initial one, which corresponds to 4 times higher catalytic rate of product generation to compare with non-modified laccase. After 8 days, CLEAs are in 10 times more active than native laccase.

### Conclusion

Thus, the studied laccase catalysts are tolerant to the presence of xylene. However only the laccase in CLEA retains some activity in ASW. The studies of laccase in paint show that non-modified laccase lost ca 90 % of activity after 8 days, while laccase in CLEA gains ca. 1200 % of activity.

### Example 7: Development of a catalyst based on cross-linking of Subtilisin with Chitosan for antifouling marine paint applications

### Materials

Subtilisin, succinyl-alanine-alanine-alanine-p-nitroanilide (suc-AAApNa), buffer salts were obtained from Sigma-Aldrich.

Mille Light paint from Hempel A/S was used as a blank paint.

Artificial sea water, ASW, contains 547.6 mM NaCl, 56.8 mM MgSO₄x7H₂O and 2.4 mM NaHCO₃. All aqueous solutions were prepared with de-ionised water.

### Acetic modification of chitosan

Chitosan powder was mixed with 2 % (w/w) acetic acid and stirring overnight to provide a 1 % (w/w) solution of acetate-modified polymer. This solution was mixed with 7-10 times volume excess of acetone, and chitosan acetate was precipitated. The product was filtered through a membrane and dried. Liquid nitrogen was used to cool the dried material and this was ground to provide a powder.

### Preparation of subtilisin-chitosan films

Chitosan acetate was mixed with 0.1 M acetate buffer, pH 5.5 and stirred overnight to provide a 1% solution. A 75 mg/ml subtilisin solution in 0.1 M acetate buffer, pH 5.5, also containing 15 mM CaCl₂ was prepared. The chitosan acetate solution was mixed with the subtilisin solution in the ratio (4:1) and was stirred for 2 h. The resulting mixture was dried by bubbling N₂ gas through it overnight. The precipitate obtained was twice stirred with a 2% glutaraldehyde solution in water for 1 h each time. The resulting catalyst was washed three times using 0.05 M Tris-HCl buffer, pH 8.2 containing 5 mM CaCl₂ for 2 h each time. The solid and was then left to dry in the air to provide the catalyst as a powder.

### Preparation of subtilisin-chitosan paint

Two different paint mixtures were prepared, one with cross-linked subtilisin-chitosan, and the second with a non-covalently bound chitosan-subtilisn complex (prepared as above but without treatment by glutaraldehyde). Both paint mixtures was made as follows; first, 250 µg dried catalyst was suspended in a minimum volume of xylene (>1 mL) which was then mixed vigorously with 10 g of Mille Light paint. The paint/catalyst mixture was then applied to a "Write-on Transparency Film" with a paint thickness of 300 µm and width of ∼5 cm using a Baker Film Applicator. The paint films were left overnight to dry.

After drying, small circles of paint containing films were cut out (2.5 cm diameter) and each circle was glued to a well in a multidish and left in ASW for 1 hour. Then each well was rinsed with demineralised water and the films used for activity measurement.

### Activity assay

The catalytic activity of each catalyst was determined by its ability to cleave *p*-nitroanilide from a synthetic peptide, succinyl-alanine-alanine-alanine-p-nitroanilide, suc-AAApNa, by monitoring the increase of absorbance at 405 nm [*p*-nitroanilide absorbance, the determined extinction coefficient for a plate reader (volume 250 µl) is 11800 M⁻¹ cm⁻¹, for a spectrophotometer is 18300 M⁻¹ cm⁻¹]. In order to monitor the catalytic reaction enzyme powder was dissolved in 0.1 M Tris-HCl buffer containing 0.01 M CaCl₂, 0.005% Triton X-100, pH 8.6. 100 µl of this enzyme solution was mixed with 1ml of substrate solution, containing 0.2 % of suc-AAApNA in buffer. The catalytic activity of samples was determined as the generation of 1 µmol of product by 1 mg of enzyme in 1 min.

### Measurement of catalytic activity of subtilisin-chitosan in paint

First a 2 % (v/v) solution of substrate (30 mg/mL suc-AAApNa in DMSO) in buffer (0.1 M Tris HCl buffer, pH 8.6 containing 0.01 M CaCl₂ and 0.005% Triton X-100) was prepared. Then, 3 mL of this substrate solution was added to each film-containing well and to an empty well for reference. Absorbance measurements at 405 nm were then made after 1 hour and after 24 hours.

### Results and discussion

Enzymes that are suitable for use in organic solvent based paints need to meet several criteria. These criteria include being rigid enough not to be destroyed during mixing with paint and during drying of the paint layer onto a surface. Furthermore, the modification of the enzyme should take place under mild condition to avoid destroying the catalyst. One approach is the entrapment of the enzyme into a polysaccharide network maintained by hydrogen-bonding followed by precipitation and cross-linking. Since subtilisin is a positively charged molecule, the chitosan amino groups were modified by acetate before adding the enzyme, so as to provide a charge interaction between the enzyme and chitosan,.

After the formation of a polyelectrolyte complex the catalyst was precipitated from the solution by drying using bubbling N₂-gas. Then to stabilise the obtained catalyst the precipitate was cross-linked using glutaraldehyde. This procedure allowed the formation of the complexes of chitosan-chitosan, enzyme-enzyme and chitosan-enzyme which were mixed together by forming films.

The enzymatic analysis of the obtained catalyst shows that the final loading of the system was ca. 146 mg per 1 g of catalyst which is almost in 2 times higher than previously reported (Macquarrie, D. J. & Bacheva, A. (2008) Green Chemistry 10, 692-695).

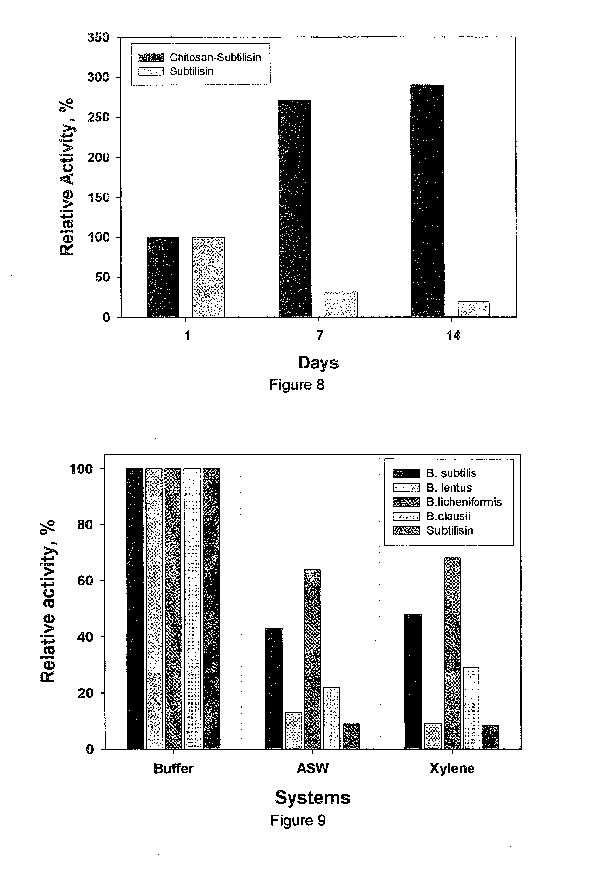

The studies of catalytic activity of subtilisin-chitosan complexes and non-modified subtilisin have been performed in dried paint. The catalytic activity of non-covalently modified subtilisin-chitosan complexes was not detected. The results of catalytic performance of covalently modified subtilisin-chitosan complexes and non-modified subtilisin are presented in Figure 8. As can be seen from the figure, non-modified subtilisin lost ca. 80 % of activity after 14 days, while the subtilin-chitosan catalyst gains about 300 % of activity in paint for the same period of time.

### Example 8 Implementation Of Proteases' Cross-Linked Enzymes Aggregates Antifouling Marine Paint Applications

### Materials

Subtilisin succinyl-alanine-alanine-alanine-p-nitroanilide (suc-AAApNa), and buffer salts were obtained from Sigma-Aldrich.

Xylene was purchased from Merck.

CLEAs of proteases from *B. subtilis, B. lentus* (esperase), *B. licheniformis* (alcalase) and *B. clausii* (savinase) were obtained form CLEAs Technologies B.V.

Mille Light paint from Hempel was used as a blank paint.

All aqueous solutions were prepared with de-ionised water.

ASW contains 547,6 mM NaCl, 56,8 mM MgSO₄x7H₂O and 2,4 mM NaHCO₃.

### Activity assay

The catalytic activity of each catalyst was determined by its ability to cleave p-nitroanilide from a synthetic peptide, suc-AAApNa, by monitoring of increase of absorbance at 405 nm by ELISA-reader (Molecular Devices). In order to monitor the catalytic reaction enzyme powder was dispersed in 0.1 M Tris-HCl buffer containing 0.01 M CaCl₂, and 0,005%Tritonx-100 pH 8.2. 20 µl of each enzyme solution was mixed with 200µl of substrate solution, containing 0.2 % of suc-AAApNA in buffer. The catalytic activity of samples was determined as the generation of 1 µmol of product by 1 mg of enzyme in 1 min.

### Results and discussion

In order to identify initial activity of the catalysts, the screening of their performance in alkaline buffer was performed (see table 5) As can be seen from the table non-modified subtilisin has the highest activity. Most of CLEAs have similar activity in buffer. The only exception is the performance of CLEA *B. lentus.*

The tolerance of these enzymes for marine environments was then tested. Therefore the catalytic activity of these enzymes was tested in ASW as buffer. These results show a noticeable decrease of activity for most of protease enzymes (table 5 and Figure 9).

**Table 5: Catalytic activity of proteases in alkaline buffer, ASW and after treatment by xylene.**

| **Enzymes** | **Activity, µmol min⁻¹ mg⁻¹** | | |
|---|---|---|---|
| | **Buffer** | **ASW** | **Xylene** |
| CLEA *B. subtilis* | 30.7 | 13.4 | 14.8 |
| CLEA *B.* /*entus* | 395.8 | 49.6 | 38.4 |
| CLEA *B. licheniformis* | 77.4 | 49.3 | 52.8 |
| CLEA *B. clausii* | 167.6 | 36.3 | 48.5 |
| Subtilisin | 2745.8 | 253.0 | 234.2 |

It is believed that the absence of Ca-ions destabilise the protein structures which affects on their catalytic performance.

The catalysts showed different sensitivity in ASW, in particular, CLEAs of *B. subtilis* and *B. licheniformis* proved more effective than the other CLEAs in retaining their activity in ASW as compared to their activity in the buffer (Figure 9).

The CLEAs were also analysed for their tolerance to xylene which is a major paint component. The catalysts were incubated in technical grade xylene for 24 hours. After complete drying of the xylene, the catalysts were dispersed in ASW and the catalytic activity was measured. It was found that xylene did not effect the catalytic performance of most of catalysts. Only CLEA *B. lentus* displayed a reduced activity (approximately 5 %). However for CLEA *B. licheniformis* an increase in catalytic performance was observed. A possible reason for this is that the xylene may dissolve small organic impurities which have been absorbed on the protein surface during catalyst production and which can partly inhibit the enzyme performance.

Thus, most of the protease are tolerant to the presence of xylene and retain some activity. However, most protease CLEAs have better stability in ASW than in xylene, although, a minimal loss of catalytic activity was observed for CLEA *B. licheniformis.* The absolute value of catalytic activity was the highest for non-modified subtilisin. However the use of non-modified enzyme in the paint can be problematic. The small size of the catalyst will allow fast leaching of enzyme from the painted surface and, therefore, will result in a fast decrease in the antifouling properties of the paint over time.

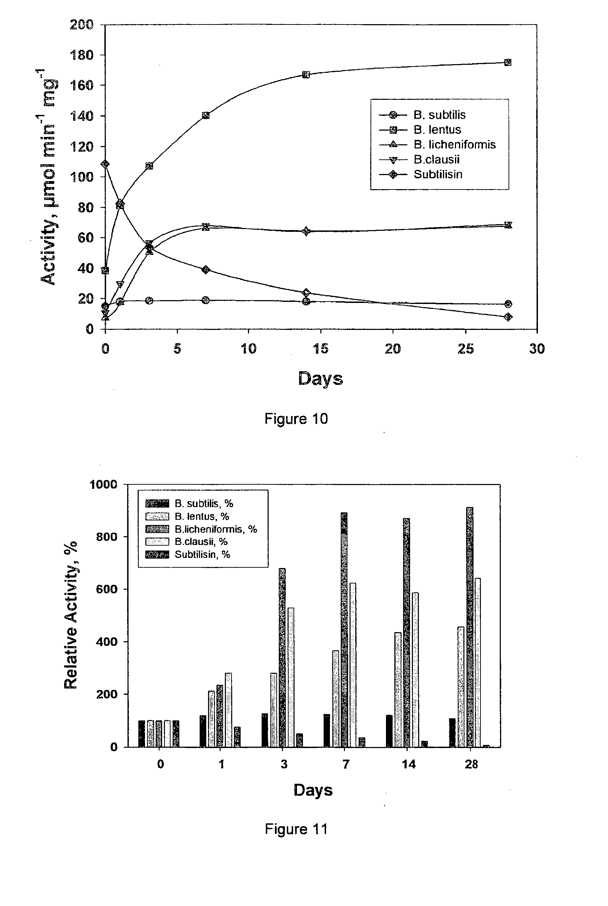

In order to study this, all catalysts were dispersed in marine paint. The paint was applied on films and dried out. After the drying the films were immersed in ASW and stored at room temperature. The catalytic assay was performed in buffer. The results of remaining enzymatic activity by catalysts are presented in Figures 10 and 11. As can be seen from Figure 10, most of CLEAS retain a high level of the initial catalytic activity, which is similar to the levels of catalytic activity shown in Table 5. However, subtilisin rapidly lost more than 50% of the catalytic activity reported in Table 5.

The profile of catalytic stability for subtilisin shows that this enzyme lost almost 90 % of its catalytic activity over the course of the study. In contrast, the catalytic profiles for the CLEAs are unusual. The catalytic activity of all of the CLEAs was observed to increase during the studied period. This was especially the case for the *B. licheniformis* enzyme which was observed to increase its catalytic activity by more than 900 % during the studied period.

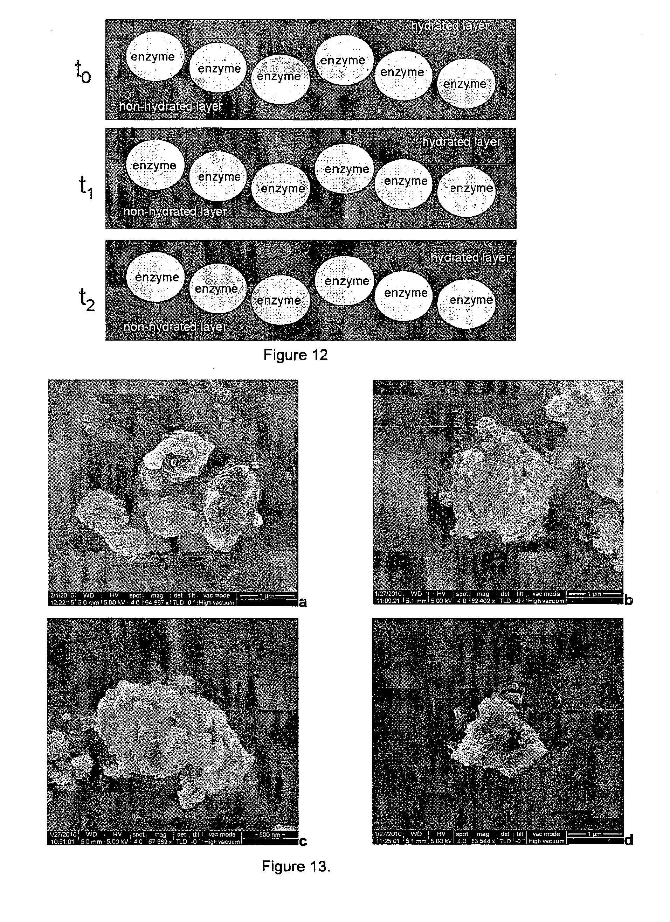

A possible explanations is that during the storage in ASW the dried paint surface becomes more hydrated, which leads to an increase in the access of the enzyme to the surface and, therefore, to an increase in the total catalytic activity. The principal scheme for this process is shown in Figure 12. As can be see from the scheme, initially, at t₀, only 1/3 of catalyst is accessible to the catalytic reaction, then, at t₁, when the hydration level increases, 2/3 of catalyst is accessible. Finally at t₃, all of the catalyst is still present in the paint and has access to the surface. As can be seen from the scheme, to make this process possible, the catalyst should have a larger size than the thickness of the layer being hydrated, otherwise, it is likely that catalyst will be leached away from the surface. This hypotheses explains that for CLEAs the effect of layer hydration is positive while for single subtilisin molecules it is a negative one. Of the tested CLEAs it appears that the *B. licheniformis* CLEA is the largest in size, that *B. lentus* and *B. clausii* are similar in size and that the CLEA *B subtilis* is the smallest.

To prove this concept, SEM micrographs of CLEAs have been made. The images are presented in Figure 13 (B. *subtilis* (a), *B. lentus* (b), *B. licheniformis* (c) and *B. clausii* (d)). As can be seen from the figure, the size of the particles can be estimates as follows: *B. subtilis -* 125 x 50 nm², *B. lentus -* 125 x 125 nm², *B. licheniformis -* 250 x 250 nm² and *B. clausii -* 250 x 125 nm², Thus, *B. licheniformis* CLEAs have the maximal size and *B. subtilis* are the smallest, which correlates very well with the catalytic performance data in dried paint.

Various modifications and variations of the described methods and system of the invention will be apparent to those skilled in the art without departing from the scope of the invention. Although the invention has been described in connection with specific preferred embodiments, it should be understood that the invention as claimed should not be unduly limited to such specific embodiments.

## Claims

1. An antifouling composition comprising:
(i) a surface coating material; and
(ii) a cross-linked enzyme crystal or cross-linked enzyme aggregate wherein the enzyme is cross-linked with a multifunctional cross-linking agent selected from chitosan or a multifunctional cross-linking agent of the following structure:
A-L-B
wherein A and B are functional groups selected from alcohol, aldehyde, imide, cyanate, isocyanate and mixtures thereof,
L is a linker group selected from alkylene and dextran.

2. A composition according to claim 1, wherein the enzyme is selected from hydrolases, oxidoreductases, transferases, lyases and isomerases.

3. A composition according to claim 1 or 2, wherein the enzyme is selected from a protease, hexose oxidase, glucose oxidase and alcohol dehydrogenase (ADH).

4. A composition according to claim 3, wherein the protease is a subtilisin.

5. A composition according to any one of the preceding claims, wherein the composition is an oil-based paint.

6. A composition according to claim 5, wherein the cross-linked enzyme crystal or cross-linked enzyme aggregate is dried before adding to the oil-based paint.

7. A composition according to any one of the preceding claims, wherein the composition further comprises a substrate wherein the cross-linked enzyme crystal or cross-linked enzyme aggregate generates an anti-foulant compound when acting on the substrate.

8. A composition according to any one of the preceding claims, wherein the composition further comprises a first enzyme and a first substrate, wherein action of the first enzyme on the first substrate provides a second substrate; and wherein the cross-linked enzyme crystal or cross-linked enzyme aggregate generates an anti-foulant compound when acting on the second substrate.

9. A composition according to any one of the preceding claims, wherein the surface coating material comprises components selected from polyvinyl chloride resins in a solvent based system, chlorinated rubbers in a solvent based system, acrylic resins and methacrylate resins in solvent based or aqueous systems, vinyl chloride-vinyl acetate copolymer systems as aqueous dispersions or solvent based systems, polyvinyl methyl ether, butadiene copolymers such as butadiene-styrene rubbers, butadiene-acrylonitrile rubbers, and butadiene-styrene-acrylonitrile rubbers, drying oils such as linseed oil, alkyd resins, asphalt, epoxy resins, urethane resins, polyester resins, phenolic resins, natural) rosin, rosin derivatives, disproportionated rosin, partly polymerised rosin, hydrogenated rosin, gum rosin, disproportionated gum rosin, non-aqueous dispersion binder systems, silylated acrylate binder systems, metal acrylate binder systems, derivatives and mixtures thereof.

10. A process for the preparation of an antifouling composition comprising the steps of:
(a) preparing an enzyme crystal or an enzyme aggregate and reacting the enzyme crystal or enzyme aggregate with a multifunctional cross-linking agent selected from chitosan or a multifunctional cross-linking agent of the following structure:
A-L-B
wherein A and B are functional groups selected from alcohol, aldehyde, imide, cyanate, isocyanate and mixtures thereof,
L is a linker group selected from alkylene and dextran
to produce a cross-linked enzyme crystal or a cross-linked enzyme aggregate;
(b) optionally drying the cross-linked enzyme crystal or cross-linked enzyme aggregate;
(c) optionally increasing the hydrophobicity of the surface of the cross-linked enzyme crystal or cross-linked enzyme aggregate; and
(d) adding the cross-linked enzyme crystal or cross-linked enzyme aggregate to a surface coating material to produce a composition as defined in any one of claims 1 to 9.

11. Use of a cross-linked enzyme crystal or a cross-linked enzyme aggregate wherein the enzyme is cross-linked with a multifunctional cross-linking agent selected from chitosan or a multifunctional cross-linking agent of the following structure:
A-L-B
wherein A and B are functional groups selected from alcohol, aldehyde, imide, cyanate, isocyanate and mixtures thereof,
L is a linker group selected from alkylene and dextran
to inhibit fouling.

12. Use of a cross-linked enzyme crystal or a cross-linked enzyme aggregate according to claim 11, to inhibit fouling caused by biofilm formation.

13. Use of a cross-linked enzyme crystal or a cross-linked enzyme aggregate according to claim 11 or 12, wherein the enzyme is selected from hydrolases, oxidoreductases, transferases, lyases and isomerases.

14. Use of a cross-linked enzyme crystal or a cross-linked enzyme aggregate according to any one of claims 11 to 13, wherein the enzyme is selected from a protease, hexose oxidase, glucose oxidase and alcohol dehydrogenase (ADH).

15. Use of a cross-linked enzyme crystal or a cross-linked enzyme aggregate according to claim 14, wherein the protease is a subtilisin.

16. A method for inhibiting biofilm formation on an article comprising contacting the article with an effective amount of a composition as defined in any one of claims 1 to 9.

17. A method for inhibiting biofilm formation on an article comprising applying to the article an effective amount of a composition as defined in any one of claims 1 to 9.

18. An article provided with a composition as defined in any one of claims 1 to 9.

## Patentansprüche

1. Antifouling-Zusammensetzung, umfassend:
(i) ein Oberflächenbeschichtungsmaterial und
(ii) einen vernetzten Enzymkristall oder ein vernetztes Enzymaggregat, wobei das Enzym mit einem multifunktionellen Vernetzungsmittel, das aus Chitosan oder einem multifunktionellen Vernetzungsmittel der folgenden Struktur:
A-L-B
worin A und B für funktionelle Gruppen, die aus Alkohol, Aldehyd, Imid, Cyanat, Isocyanat und Mischungen davon ausgewählt sind, stehen,
L für eine Linkergruppe, die aus Alkylen und Dextran ausgewählt ist, steht,
ausgewählt ist, vernetzt ist.

2. Zusammensetzung nach Anspruch 1, wobei das Enzym aus Hydrolasen, Oxidoreductasen, Transferasen, Lyasen und Isomerasen ausgewählt ist.

3. Zusammensetzung nach Anspruch 1 oder 2, wobei das Enzym aus einer Protease, Hexoseoxidase, Glucoseoxidase und Alkoholdehydrogenase (ADH) ausgewählt ist.

4. Zusammensetzung nach Anspruch 3, wobei es sich bei der Protease um ein Subtilisin handelt.

5. Zusammensetzung nach einem der vorhergehenden Ansprüche, wobei es sich bei der Zusammensetzung um ein auf Öl basierendes Anstrichmittel handelt.

6. Zusammensetzung nach Anspruch 5, wobei der vernetzte Enzymkristall bzw. das vernetzte Enzymaggregat vor der Zugabe zu dem auf Öl basierenden Anstrichmittel getrocknet wird.

7. Zusammensetzung nach einem der vorhergehenden Ansprüche, wobei die Zusammensetzung ferner ein Substrat umfasst, wobei der vernetzte Enzymkristall bzw. das vernetzte Enzymaggregat bei Einwirkung auf das Substrat eine Antifouling-Verbindung bildet.

8. Zusammensetzung nach einem der vorhergehenden Ansprüche, wobei die Zusammensetzung ferner ein erstes Enzym und ein erstes Substrat umfasst, wobei die Einwirkung des ersten Enzyms auf das erste Substrat ein zweites Substrat liefert und wobei der vernetzte Enzymkristall bzw. das vernetzte Enzymaggregat bei Einwirkung auf das zweite Substrat eine Antifouling-Verbindung bildet.

9. Zusammensetzung nach einem der vorhergehenden Ansprüche, wobei das Oberflächenbeschichtungsmaterial Komponenten umfasst, die aus Polyvinylchloridharzen in einem lösungsmittelbasierten System, chlorierten Kautschuken in einem lösungsmittelbasierten System, Acrylharzen und Methacrylatharzen in lösungsmittelbasierten oder wässrigen Systemen, Vinylchlorid-Vinylacetat-Copolymer-Systemen wie wässrigen Dispersionen oder lösungsmittelbasierten Systemen, Polyvinylmethylether, Butadien-Copolymeren wie Butadien-Styrol-Kautschuken, Butadien-Acrylnitril-Kautschuken und Butadien-Styrol-Acrylnitril-Kautschuken, trocknenden Ölen wie Leinöl, Alkydharzen, Asphalt, Epoxidharzen, Urethanharzen, Polyesterharzen, Phenolharzen, natürlichem Kolophonium, Kolophoniumderivaten, disproportioniertem Kolophonium, teilpolymerisiertem Kolophonium, hydriertem Kolophonium, Balsamharz, disproportioniertem Balsamharz, nichtwässrigen Dispersionsbindemittelsystemen, silyliertes Acrylat enthaltenden Bindemittelsystemen, Metallacrylatbindemittelsystemen, Derivaten und Mischungen davon ausgewählt sind.

10. Verfahren zur Herstellung einer Antifouling-Zusammensetzung, bei dem man:
(a) einen Enzymkristall oder ein Enzymaggregat herstellt und den Enzymkristall bzw. das Enzymaggregat mit einem multifunktionellen Vernetzungsmittel, das aus Chitosan oder einem multifunktionellen Vernetzungsmittel der folgenden Struktur:
A-L-B
worin A und B für funktionelle Gruppen, die aus Alkohol, Aldehyd, Imid, Cyanat, Isocyanat und Mischungen davon ausgewählt sind, stehen,
L für eine Linkergruppe, die aus Alkylen und Dextran ausgewählt ist, steht,
ausgewählt wird, zu einem vernetzten Enzymkristall bzw. einem vernetzten Enzymaggregat umsetzt;
(b) gegebenenfalls den vernetzten Enzymkristall bzw. das vernetzte Enzymaggregat trocknet;
(c) gegebenenfalls die Hydrophobie der Oberfläche des vernetzten Enzymkristalls bzw. des vernetzten Enzymaggregats erhöht; und
(d) den vernetzten Enzymkristall bzw. das vernetzte Enzymaggregat zu einem Oberflächenbeschichtungsmaterial gibt, was eine Zusammensetzung gemäß einem der Ansprüche 1 bis 9 ergibt.

11. Verwendung eines vernetzten Enzymkristalls oder eines vernetzten Enzymaggregats, wobei das Enzym mit einem multifunktionellen Vernetzungsmittel, das aus Chitosan oder einem multifunktionellen Vernetzungsmittel der folgenden Struktur:
A-L-B
worin A und B für funktionelle Gruppen, die aus Alkohol, Aldehyd, Imid, Cyanat, Isocyanat und Mischungen davon ausgewählt sind, stehen,
L für eine Linkergruppe, die aus Alkylen und Dextran ausgewählt ist, steht,
ausgewählt ist, vernetzt ist,
zur Inhibierung von Fouling.

12. Verwendung eines vernetzten Enzymkristalls oder eines vernetzten Enzymaggregats nach Anspruch 11 zur Inhibierung von durch Biofilmbildung verursachtem Fouling.

13. Verwendung eines vernetzten Enzymkristalls oder eines vernetzten Enzymaggregats nach Anspruch 11 oder 12, wobei das Enzym aus Hydrolasen, Oxidoreductasen, Transferasen, Lyasen und Isomerasen ausgewählt ist.

14. Verwendung eines vernetzten Enzymkristalls oder eines vernetzten Enzymaggregats nach einem der Ansprüche 11 bis 13, wobei das Enzym aus einer Protease, Hexoseoxidase, Glucoseoxidase und Alkoholdehydrogenase (ADH) ausgewählt ist.

15. Verwendung eines vernetzten Enzymkristalls oder eines vernetzten Enzymaggregats nach Anspruch 14, wobei es sich bei der Protease um ein Subtilisin handelt.

16. Verfahren zur Inhibierung der Biofilmbildung auf einem Gegenstand, bei dem man den Gegenstand mit einer wirksamen Menge einer Zusammensetzung gemäß einem der Ansprüche 1 bis 9 in Berührung bringt.

17. Verfahren zur Inhibierung der Biofilmbildung auf einem Gegenstand, bei dem man auf den Gegenstand eine wirksame Menge einer Verbindung gemäß einem der Ansprüche 1 bis 9 aufbringt.

18. Gegenstand, der mit einer Zusammensetzung gemäß einem der Ansprüche 1 bis 9 versehen ist.

## Revendications

1. Composition anti-encrassement comprenant :
(i) un matériau de revêtement de surface ; et
(ii) un cristal d'enzyme réticulée ou un agrégat d'enzyme réticulée dans lequel l'enzyme est réticulée avec un agent de réticulation multifonctionnel de la structure suivante :
A-L-B
dans laquelle A et B sont des groupes fonctionnels choisis parmi un alcool, un aldéhyde, un imide, un cyanate, un isocyanate et des mélanges de ceux-ci,
L est un groupe lieur choisi parmi un alkylène et un dextrane.

2. Composition selon la revendication 1, dans laquelle l'enzyme est choisie parmi des hydrolases, des oxydoréductases, des transférases, des lyases et des isomérases.

3. Composition selon la revendication 1 ou 2, dans laquelle l'enzyme est choisie parmi une protéase, une hexose oxydase, une glucose oxydase et une alcool déshydrogénase (ADH).

4. Composition selon la revendication 3, dans laquelle la protéase est une subtilisine.

5. Composition selon l'une quelconque des revendications précédentes, la composition étant une peinture à base d'huile.

6. Composition selon la revendication 5, dans laquelle le cristal d'enzyme réticulée ou l'agrégat d'enzyme réticulée est séché avant ajout à la peinture à base d'huile.

7. Composition selon l'une quelconque des revendications précédentes, la composition comprenant en outre un substrat dans lequel le cristal d'enzyme réticulée ou l'agrégat d'enzyme réticulée génère un composé anti-encrassement lorsqu'il agit sur le substrat.

8. Composition selon l'une quelconque des revendications précédentes, la composition comprenant en outre une première enzyme et un premier substrat, l'action de la première enzyme sur le premier substrat produisant un deuxième substrat, et le cristal d'enzyme réticulée ou l'agrégat d'enzyme réticulée génère un composé anti-encrassement lorsqu'il agit sur le deuxième substrat.

9. Composition selon l'une quelconque des revendications précédentes, dans laquelle le matériau de revêtement de surface comprend des composants choisis parmi des résines de chlorure de polyvinyle dans un système à base de solvant, des caoutchoucs chlorés dans un système à base de solvant, des résines acryliques et des résines de méthacrylate dans des systèmes à base de solvant ou aqueux, des systèmes de copolymère de chlorure de vinyle-acétate de vinyle sous forme de dispersions aqueuses ou de systèmes à base de solvant, l'éther méthylique de polyvinyle, des copolymères de butadiène tels que des caoutchoucs butadiène-styrène, des caoutchoucs butadiène-acrylonitrile, et des caoutchoucs butadiène-styrène-acrylonitrile, des huiles siccatives telles que l'huile de lin, des résines alkides, l'asphalte, des résines époxy, des résines uréthane, des résines polyester, des résines phénoliques, une rosine naturelle, des dérivés de rosine, la rosine dismutée, la rosine partiellement polymérisée, la rosine hydrogénée, la colophane, la colophane dismutée, des systèmes de liant de dispersion non aqueux, des systèmes de liant d'acrylate silylé, des systèmes de liant d'acrylate de métal, des dérivés et des mélanges de ceux-ci.

10. Procédé pour la préparation d'une composition anti-encrassement comprenant les étapes de :
(a) préparation d'un cristal d'enzyme ou d'un agrégat d'enzyme et réaction du cristal d'enzyme ou de l'agrégat d'enzyme avec un agent de réticulation multifonctionnel choisi parmi le chitosane ou un agent de réticulation multifonctionnel de la structure suivante :
A-L-B
dans laquelle A et B sont des groupes fonctionnels choisis parmi un alcool, un aldéhyde, un imide, un cyanate, un isocyanate et des mélanges de ceux-ci,
L est un groupe lieur choisi parmi un alkylène et un dextrane
pour produire un cristal d'enzyme réticulée ou un agrégat d'enzyme réticulée ;
(b) facultativement le séchage du cristal d'enzyme réticulée ou de l'agrégat d'enzyme réticulée ;
(c) facultativement l'augmentation de l'hydrophobicité de la surface du cristal d'enzyme réticulée ou de l'agrégat d'enzyme réticulée ; et
(d) l'ajout du cristal d'enzyme réticulée ou de l'agrégat d'enzyme réticulée à un matériau de revêtement de surface pour produire une composition telle que définie dans l'une quelconque des revendications 1 à 9.

11. Utilisation d'un cristal d'enzyme réticulée ou d'un agrégat d'enzyme réticulée où l'enzyme est réticulée avec un agent de réticulation multifonctionnel choisi parmi le chitosane ou un agent de réticulation multifonctionnel de la structure suivante :
A-L-B
dans laquelle A et B sont des groupes fonctionnels choisis parmi un alcool, un aldéhyde, un imide, un cyanate, un isocyanate et des mélanges de ceux-ci,
L est un groupe lieur choisi parmi un alkylène et un dextrane
pour inhiber l'encrassement.

12. Utilisation d'un cristal d'enzyme réticulée ou d'un agrégat d'enzyme réticulée selon la revendication 11, pour inhiber l'encrassement causé par la formation de biofilm.

13. Utilisation d'un cristal d'enzyme réticulé ou d'un agrégat d'enzyme réticulée selon la revendication 11 ou 12, dans laquelle l'enzyme est choisie parmi des hydrolases, des oxydoréductases, des transférases, des lyases et des isomérases.

14. Utilisation d'un cristal d'enzyme réticulé ou d'un agrégat d'enzyme réticulée selon l'une quelconque des revendications 11 à 13, dans laquelle l'enzyme est choisie parmi une protéase, une hexose oxydase, une glucose oxydase et une alcool déshydrogénase (ADH).

15. Utilisation d'un cristal d'enzyme réticulé ou d'un agrégat d'enzyme réticulée selon la revendication 14, dans laquelle la protéase est une subtilisine.

16. Procédé pour inhiber la formation de biofilm sur un article comprenant la mise en contact de l'article avec une quantité efficace d'une composition telle que définie dans l'une quelconque des revendications 1 à 9.

17. Procédé pour inhiber la formation de biofilm sur un article comprenant l'application sur l'article d'une quantité efficace d'une composition telle que définie dans l'une quelconque des revendications 1 à 9.

18. Article pourvu de la composition telle que définie dans l'une quelconque des revendications 1 à 9.
